# EUROPÄISCHE PATENTSCHRIFT

(11) **EP 1 688 042 B1**
(45) Veröffentlichungstag und Bekanntmachung des Hinweises auf die Patenterteilung: **25.06.2014**
(21) Anmeldenummer: 06101284.5
(22) Anmeldetag: 03.02.2006
(51) Int. Cl.: G07F 17/00, G07F 11/58, G07F 9/10, A21B 1/46, A21B 7/00, G07F 11/26

(54) **Verfahren und Vorrichtung zur Lagerung, Behandlung und Ausgabe von Lebensmitteln**
Method and system for storage, processing and dispensing of food products
Méthode et système pour le stockage, le traitement et la distribution de produits alimentaires

(30) Priorität: 03.02.2005 DE 102005005193
(43) Veröffentlichungstag der Anmeldung: 09.08.2006
(60) Teilanmeldung: 09166046.4
(73) Patentinhaber: R. Weiss Verpackungstechnik GmbH & Co. KG, 74564 Crailsheim (DE)
(72) Erfinder: Weiss, Reinald, 74594, Kressberg (DE)
(74) Vertreter: Schlief, Thomas P.

(56) Entgegenhaltungen:
- EP-A- 1 433 381
- EP-A- 1 617 385
- AU-B2- 553 473
- DE-A1- 3 401 512
- DE-A1- 10 228 500
- DE-A1- 10 358 541
- DE-U1- 20 302 346
- FR-A- 2 821 524

## Beschreibung

Die vorliegende Erfindung betrifft eine Vorrichtung sowie ein Verfahren zur Lagerung, Behandlung und Ausgabe von unterschiedlichen Backwaren nach den Oberbegriffen der unabhängigen Ansprüche.

Der Vertrieb von Lebensmitteln, wie beispielsweise Backwaren, erfolgt in konventioneller Weise über Fachgeschäfte, wie Bäckereien oder im Falle von Fleisch- und Wurstwaren über Metzgereien. In zunehmendem Maß werden aber auch neue Vertriebswege, wie beispielsweise über Supermärkte, erschlossen. Hierbei ergeben sich unterschiedliche Anforderungen. Eine Forderung ist dabei, dass der Vertrieb der Waren möglichst kostengünstig sein muss. Darüber hinaus muss die Ware ansprechend und möglichst frisch sein. Im Hinblick auf die erste Forderung nimmt der Einsatz automatisierter Vorrichtungen zu, da damit kostenaufwendiger Personaleinsatz umgangen wird. Bei der Beurteilung der Kosten ist aber auch der für eine Vorrichtung benötigte Platzbedarf von Bedeutung. Bei modernen Supermärkten wird hierzu beispielsweise eine Kenngröße ermittelt, mit welcher das Verhältnis von Verkaufsfläche zu Umsatz bestimmt und überwacht wird. Ziel ist es dabei, pro bereitgestellter Flächeneinheit Verkaufsfläche einen möglichst hohen Umsatz zu erzielen.

Weiterhin von Bedeutung ist auch eine ansprechende und lebensmitteltechnisch unbedenkliche Bereithaltung und Abgabe der Lebensmittel. Bekannt sind hierzu beispielsweise Backöfen, die in Verkaufsräumen von Supermärkten aufgestellt sind. Diese sind vom Verkaufspersonal zu befüllen und zu entleeren.

Die DE 102 28 500 A1 beschreibt eine Vorrichtung zur automatischen Wärmebehandlung von stückförmigen Lebensmitteln. Hierbei sind ein automatisches Zuführmodul und ein manuelles Zuführmodul vorgesehen. Durch die Kombination von automatischem und manuellem Zuführmodul soll bei gleichzeitig kompaktem Aufbau der Lebensmittel-Durchsatz erhöht werden. Ferner ist eine Pufferung sowie eine manuelle Zuführung von anders gearteten Lebensmitteln möglich, auf die das automatische Zuführmodul nicht eingestellt ist.

Die DE 203 02 346 U1 offenbart einen Backofen, bei dem Backrohlinge 3 in Vorratsbehältern 7 vorgehalten und mittels Schwerkraftförderung über eine verschließbare Schleuse und Zuführrinnen 11 auf ein Zubringband 10 abgelegt werden.

Die EP 1 433 381 A offenbart ebenfalls ein gattungsgemäßes Gerät sowie Verfahren zur Lagerung, Behandlung und Ausgabe von Backwaren.

Die FR 2 821 524 A gilt als nächstliegender Stand der Technik und offenbart einen automatischen Ofen, dessen Beladestelle übereinander angeordnete schräge Rutschen aufweist, auf denen die Backwaren zu verfahrbaren Trägerelementen rutschen.

Aufgabe der vorliegenden Erfindung ist es, eine Vorrichtung und ein Verfahren bereitzustellen, mit denen Lebensmittel zuverlässig, kostengünstig, in lebensmitteltechnisch einwandfreier Weise und zudem möglichst ansprechend für die Kunden bereitzustellen sind.

Gelöst wird die vorgenannte Aufgabe durch eine Vorrichtung nach Anspruch 1 bzw. ein entsprechendes Verfahren nach Anspruch 27, wobei ein als Aufgabeeinrichtung ausgebildeter erster Abschnitt verfahrbare Trägerelemente aufweist, wobei auf die Trägerelemente jeweils mehrere Kleinbackwaren in vereinzelter Form seitens einer Bedienperson an der Beladestelle auflegbar sind bzw. aufgelegt werden. Mittels dieser Ausgestaltung wird ein äußerst zuverlässiger Betrieb der erfindungsgemäßen Vorrichtung mit einem besonders geringen Personalaufwand für den laufenden Betrieb erreicht. Eine willkürliche Lage der Kleinbackwaren, wie sie beispielsweise durch das übliche, aus dem Stand der Technik bekannte Schütten in einen Sammelbehälter entsteht und die ein nachträgliches Vereinzeln der Backwaren innerhalb der Vorrichtung erforderlich macht, wird hierdurch effektiv vermieden, ebenso wie die bei derartigen nachträglichen Vereinzelungen häufig auftretenden Störungen, die beispielsweise durch anhaftende, herunterfallende oder blockierende Kleinbackwaren verursacht werden.

Die erfindungsgemäße Vorrichtung ist demnach mit einer Aufgabeeinrichtung mit verfahrbaren Trägerelementen versehen, um gleichzeitig eine Mehrzahl von zumindest Kleinbackwaren, insbesondere Brötchen, Laugenbrezeln oder -stangen o.dgl., in vereinzelter Form durch manuelles Auflegen seitens einer Bedienperson aufnehmen zu können. Damit ist es möglich, die Brötchen bzw. Kleinbackwaren entlang der Längsausrichtung der vorzugsweise länglich ausgebildeten und sich vorteilhafterweise über die Breite der Ausgabeeinrichtung erstreckenden Trägerelemente nebeneinander und insbesondere in vereinzelter Form anzuordnen. Die Trägerelemente können dann an eine Fördereinrichtung, beispielsweise in Form eines Förderbandes oder einer Förderkette angeschlossen durch die Vorrichtung transportiert werden.

Der besondere Vorteil einer derart ausgebildeten Vorrichtung liegt darin, dass die Backwaren bei der Aufgabe in die Vorrichtung bereits vereinzelt sind und während des gesamten Transports durch die Vorrichtung in kontrollierter Weise transportiert werden.

Für einen sicheren Betrieb und eine einfache Handhabung der erfindungsgemäßen Vorrichtung ist es vorgesehen, dass die Aufgabeeinrichtung eine Beladestelle aufweist, durch die die Trägerelemente zur Bestückung erreichbar sind. Für die Sicherheit des Bedienpersonals ist es beispielsweise erforderlich, umlaufende Förderketten und Trägerelemente in einem abgeschlossenen Bereich anzuordnen. Hierdurch sind diese vor versehentlichem Hineingreifen geschützt und die erforderliche Arbeitssicherheit ist gewährleistet.

Um dennoch eine rasche und bequeme Bestückung der Trägerelemente zu erreichen, weist die erfindungsgemäße Vorrichtung vorteilhafterweise eine verschließbare Öffnung auf, durch die wenigstens ein Trägerelement erreichbar ist. Durch diese Öffnung können dann die Brötchen bzw. Backwaren auf das Trägerelement aufgegeben und danach innerhalb der Vorrichtung weiterverarbeitet werden.

Weiterhin sind entsprechend einer erfindungsgemäßen Alternative an der Beladestelle Anzeige- und/oder Eingabeeinrichtungen zur Vorgabe und/oder Erfassung der Bestückung der Trägerelemente angeordnet. Eine solche Anzeige- und/oder Eingabeeinrichtung ist an eine zentrale Steuereinrichtung angeschlossen, um dem Bediener bei der Bestückung vorzugeben, welche Art von Backwaren in welcher Menge zu bestücken sind.

In umgekehrter Richtung kann durch eine Eingabeeinrichtung von einem Bediener die Art bzw. Menge der von ihm bestückten Backwaren an die Steuereinrichtung übermittelt werden. Die Anordnung der Anzeige- und/oder Eingabeeinrichtung erfolgt in der Nähe der Beladestelle, so dass ein Bediener diese leicht ablesen bzw. zur Vornahme von Eingaben erreichen kann.

Alle Vorgaben oder Erfassungen können sich wahlweise auf einzelne Trägerelemente oder eine Gruppe von Trägerelementen beziehen. Besonders zweckmäßig ist es, wenn sich die Vorgaben oder Erfassungen auf genau die Gruppen von Trägerelementen beziehen, welche an der Beladestelle zur Bestückung bereitstehen. Dann muss die Vorgabe oder Erfassung nur einmal für alle Trägerelemente erfolgen.

Als besonders bevorzugte Ausführungsform der Erfindung hat sich bewährt, wenn die Trägerelemente zur Aufnahme von Kleinbackwaren, wie etwa Brötchen, und Großbackwaren, wie etwa Broten einschließlich Baguettebroten, ausgebildet sind. So ist es beispielsweise möglich, die Trägerelemente als längliche aus Draht gefertigte Gitterkörbe auszubilden. In diese Gitterkörbe können dann wahlweise Brötchen, Brote oder auch Baguettebrote aufgelegt werden. Gemeinsam ist allen Backwaren hierbei die bevorzugte Ausrichtung entlang der Längsachse der Gitterkörbe, die während der nachfolgenden Verarbeitung eine sichere und störungsfreie Funktion der gesamten Vorrichtung gewährleistet. Vorzugsweise werden die Backwaren hierbei einreihig auf ihren jeweiligen Trägerelementen aufgelegt.

Gemäß einer vorteilhaften Ausgestaltung sind die Trägerelemente für Kleinbackwaren einerseits und für Großbackwaren andererseits unterschiedlich breit ausgebildet, da diese zumeist selbst unterschiedliche Breiten aufweisen. Dadurch kann eine optimierte Lage der verschiedenen Backwaren auf den jeweiligen Trägerelementen erreicht werden.

Um Störungen, beispielsweise durch herabfallende Backwaren, effektiv zu verhindern, hat es sich als besonders vorteilhaft erwiesen, wenn eine Antriebseinrichtung vorgesehen ist, welche die Trägerelemente zwischen wenigstens einer Transportstellung und einer Be- bzw. Entladestelle bewegt.

Bildet man die Trägerelemente beispielsweise mit einem Querschnitt aus, der einem rechtwinkligen und gleichzeitig nach oben offenem "V" entspricht, so sind die darin befindlichen Waren während des Transports besonders sicher, wenn die Spitze der V-förmigen Querschnittes nach unten zeigt. Für die Be- bzw. Entladung ist es dann wieder vorteilhaft, wenn eine der Seiten des V senkrecht bzw. vertikal steht, um die Backwaren auf die horizontale Fläche auf- bzw. abschieben zu können. Hierzu können entsprechende Führungen an den Stirnseiten der Trägerelemente vorgesehen sein.

Des weiteren ist es vorteilhaft, die erfindungsgemäße Vorrichtung so auszubilden, dass Fördereinrichtungen vorgesehen sind, welche die in der Längsrichtung der Trägerelemente angeordneten Backwaren unter Beibehaltung der Relativlage zueinander durch die gesamte Vorrichtung bis zum Kundenabruf an der Ausgabeeinrichtung fördern. Ziel ist es, die bei der manuellen Aufgabe erreichte kontrollierte Vereinzelung der Backwaren durch die gesamte Vorrichtung beizubehalten. Übergaben der Backwaren innerhalb der Vorrichtung, beispielsweise von einer Fördereinrichtung zur nächsten, erfolgen aus diesem Grund etwa durch horizontal wirkende Seitenschieber oder durch ein Abkippen der Trägerelemente um ihre Längsachse. Bei allen Transportbewegungen behalten jedoch die in jeweils einem Trägerelement benachbarten Backwaren stets ihre Relativbewegung zueinander bei.

Für den Betrieb der zuvor beschriebenen Vorrichtung schlägt die vorliegende Erfindung darüber hinaus ein Verfahren zur Lagerung, Behandlung und Ausgabe von - vorzugsweise vorgebackenen - Backwaren gemäß Anspruch 27 vor, bei dem die Backwaren in einem Backofen, insbesondere einem Durchlaufbackofen gebacken und mittels einer Ausgabeeinrichtung ausgegeben werden. Das erfindungsgemäße Verfahren zeichnet sich unter anderem dadurch aus, dass alle Backwaren bei ihrer Aufgabe bzw. zur Lagerung von einer Bedienperson manuell einzeln in verfahrbare Trägerelemente eingelegt werden, welche zur Förderung der Backwaren zum Backofen dienen. Hierdurch und auch durch die vorteilhafte Ausführung der Beibehaltung der Relativlage von Backwaren jeweils eines Trägerelements ergeben sich die zuvor beschriebenen Vorteile, da keine nachträgliche maschinelle Vereinzelung der Backwaren erforderlich ist.

Als besonders vorteilhaft hat es sich bei dem erfindungsgemäßen Verfahren erwiesen, wenn an der Beladestelle gleichzeitig eine Mehrzahl von Trägerelementen bereitgestellt wird, so dass ein Bediener beispielsweise gleichzeitig drei, vier oder fünf Trägerelemente beladen kann, ohne nach Befüllung eines Trägerelements das nächste vorfahren zu müssen.

Besonders günstig ist es dabei, wenn jedes der mehreren, bereitgestellten Trägerelemente mit jeweils gleichen Backwaren beladen wird. Dabei kann ein Bediener beispielsweise fünf gleichzeitig - vorzugsweise übereinander - bereitgestellte Trägerelemente mit einer Sorte von Backwaren bestücken, z.B. Brötchen. Nach dem Beladen dieser fünf Trägerelemente muss die Vorrichtung lediglich einmal weiterverfahren werden, um die nächsten fünf leeren Trägerelemente der Bedienperson zu präsentieren. Gleichzeitig muss nur einmal für diese fünf beladenen Trägerelemente die Art der bestückten Backwaren an die Maschine weitergemeldet werden, sofern dies für eine Steuerung erforderlich ist. Dies ermöglicht eine besonders effiziente Arbeitsweise, die mit steigender Anzahl der zu einer Mehrzahl zusammengefasster Trägerelemente noch weiter verbesserbar ist.

Bei einer zweiten Sorte von Backwaren, z.B. Broten, kann die Anzahl der von der Bedienpersonen zu bestückenden Trägerelemente unterschiedlich sein, da diese Trägerelemente einen größeren, z.B. vertikalen Abstand voneinander aufweisen können. Dies ist insbesondere dann der Fall, wenn diese zweite Sorte von Backwaren selbst eine größere Höhe aufweisen und dementsprechend die zugeordneten Trägerelemente weiter beabstandet sind und somit an der Beladestelle in geringerer Anzahl vorgefahren werden.

Es ist zudem vorteilhaft, wenn zumindest zwischen den zwei Abschnitten der Vorrichtung ein bautechnisches Trennmittel, insbesondere eine Wand, mit einer oder mehreren Verbindungsöffnungen angeordnet ist bzw. wird, wobei zumindest ein Abschnitt in einem Verkaufsbereich angeordnet ist. Durch die Aufteilung der Vorrichtung in zwei Abschnitte kann ein erheblicher Umfang der Vorrichtung aus dem Verkaufsbereich ausgelagert werden. Insbesondere vorteilhaft ist dies bei solchen Abschnitten, die während des Betriebes im Verkaufsbereich störend wirken, beispielsweise indem sie zu Verunreinigungen, Wärme- oder Lärmentwicklungen beitragen. Durch die erfindungsgemäße Vorrichtung wird damit gleichzeitig der Vorteil einer Reduzierung der benötigten Fläche im Verkaufsbereich bei gleichzeitiger Abstellung gravierender Störungen erreicht.

Die Verbindung zwischen den Abschnitten erfolgt über die im Trennmittel vorgesehene Verbindungsöffnung und bleibt vom Verkaufsbereich aus vorzugsweise unsichtbar, wenn sie gemäß einer bevorzugten Ausführungsform kleiner ist als die vom verkaufsbereichseitig aufgestellten Abschnitt überdeckte Fläche des bautechnischen Trennmittels. Damit entsteht trotz der Verbindungsöffnung in der Wand für die Kunden kein nachteiliger optischer Eindruck. In bestimmten Fällen, wie etwa der Anordnung einer erfindungsgemäßen Vorrichtung in einer Ecke eines Verkaufsbereichs, kann es auch ausreichend sein, wenn nur ein Teil der Verbindungsöffnung durch den verkaufsbereichsseitigen Abschnitt überdeckt ist.

Während es durchaus möglich ist, eine Vorrichtung aus zwei Abschnitten aufzubauen, wobei beispielsweise bei Backwaren ein Abschnitt eine Backfunktion und ein zweiter Abschnitt eine Ausgabefunktion ausführt, ist es auch vorteilhaft, drei Abschnitte vorzusehen. In diesem Fall dient ein erster Abschnitt zur Bevorratung/Lagerung bzw. Aufnahme/Beschickung, ein zweiter Abschnitt zur Behandlung (z.B. dem Backen) und ein dritter Abschnitt zur Lagerung bzw. Ausgabe der Lebensmittel.

Es bringt einen erheblichen Vorteil mit sich, wenn wenigstens zwei unabhängig voneinander steuerbare Fördereinrichtungen vorgesehen sind. Auf diese Weise wird die Vorrichtung in ihrer Flexibilität wesentlich verbessert. Mit steigender Anzahl unabhängiger Fördereinrichtungen steigt auch die Flexibilität der Vorrichtung. So ist es beispielsweise mit zwei Fördereinrichtungen möglich, unterschiedliche Arten von Lebensmitteln nach Bedarf zu behandeln und gezielt auszugeben. Führt beispielsweise eine erste Fördereinrichtung, wie etwa ein Förderband, durch den Lagerabschnitt und ein zweites Förderband durch den Behandlungs- und Ausgabeabschnitt, so können an der Schnittstelle zwischen Lager- und Behandlungsabschnitt Lebensmittel je nach gewünschter Art und zum gewünschten Zeitpunkt vom ersten Förderband an das durch den Behandlungsabschnitt führende zweite Förderband abgegeben, dort behandelt und schließlich an der Ausgabe ausgegeben werden.

Dazu ist es vorteilhaft, wenn jede Fördereinrichtung eine Mehrzahl von Trägerelementen aufweist, um die Lebensmittel aufzunehmen. So kann vorgesehen sein, dass unterschiedliche Lebensmittel in unterschiedlichen Trägerelementen transportiert werden. Kostensparend ist es, die Trägerelemente einheitlich bzw. gleichartig auszubilden und so zu gestalten, dass sie geeignet sind, alle in Frage kommenden Arten von Lebensmitteln aufzunehmen.

Bei großen Durchsatzmengen bietet es sich darüber hinaus an, die Trägerelemente länglich zu gestalten und quer zur Durchlaufrichtung anzuordnen, so dass sie gleichzeitig mehrere Lebensmittel nebeneinander vereinzelt aufnehmen können.

Setzt man eine Mehrzahl von Trägerelementen ein, hat es sich als vorteilhaft erwiesen, dass jedem Trägerelement wenigstens eine Information zugeordnet ist, insbesondere eine Information über Laufzeit, Art der Beladung oder den momentanen Standort. Auch die Erfassung von Be- und Entladezeiten ist bei manchen Anwendungen sinnvoll. Hierdurch wird eine Verwaltung der Trägerelemente wesentlich erleichtert, indem beispielsweise das am nächsten am Ausgabeort liegende Trägerelement mit dem angeforderten Lebensmitteltyp ermittelt und dorthin transportiert werden kann. Bei anderen Kriterien kann beispielsweise darauf geachtet werden, dass das am längsten in der Ausgabeeinrichtung verweilende Lebensmittel der angeforderten Art zuerst ausgegeben wird. Daneben erlaubt es selbstverständlich auch eine Ermittlung des genau angeforderten Lebensmitteltyps.

Für die Zubereitung von Backwaren hat es sich als besonders vorteilhaft erwiesen, wenn ein Abschnitt ein Durchlaufbackofen ist. Derartige Backöfen sind besonders zuverlässig, wartungsarm und weisen bei Bedarf gleichzeitig eine ausreichend hohe Kapazität auf. Daneben ist es bei Durchlaufbacköfen besonders einfach, diese automatisiert zu be- und entladen.

Eine besonders vorteilhafte Ausgestaltung der Erfindung sieht vor, dass ein Abschnitt eine dem Behandlungsabschnitt vorgeschaltete Aufgabeeinrichtung ist. Damit ist es dann beispielsweise möglich, bei einer aus drei Abschnitten bestehenden Vorrichtung Lebensmittel in die Aufgabeeinrichtung einzubringen, dort zu lagern und bei Bedarf zur Behandlung und Ausgabe abzurufen. Ein sich daran anschließender Behandlungsabschnitt in Form eines Backofens bereitet die Lebensmittel anschließend zu und gibt sie danach an einen dritten Abschnitt in Form einer Ausgabeeinrichtung ab. In der Ausgabeeinrichtung können die fertig behandelten, d. h. die zubereiteten Lebensmittel, dann nochmals zwischengespeichert oder direkt ausgegeben werden.

Bei erfindungsgemäßen Vorrichtungen mit besonders hoher Kapazität und besonders hoher Verkaufsleistung ist es sinnvoll, dass eine Vorrichtung gleichzeitig mehrere Ausgabemöglichkeiten aufweist. Auf diese Weise können beispielsweise zwei Kunden gleichzeitig Waren aus den verschiedenen Ausgaben abrufen, wodurch die Bildung langer Warteschlangen vermieden wird.

Um Ungenauigkeiten, wie beispielsweise Laufzeittoleranzen, auszugleichen, hat es sich als besonders vorteilhaft erwiesen, wenn zwischen einer Fördereinrichtung am bzw. durch den Backofen und einer Fördereinrichtung an der Ausgabeeinrichtung ein Zwischenspeicher vorgesehen ist. Gelangt etwa eine Backware nur mit einer Zeittoleranz von beispielsweise +/- 5 Sekunden zu einer vorgesehenen Übergabestelle, wäre es ohne Zwischenspeicher erforderlich, die dort vorgesehene Aufnahme bzw. das dort zur Aufnahme vorgesehene Trägerelement für die gesamte Zeitdauer dieses Zeitfensters dort bereitzuhalten. In dieser Zeit kann die wartende Fördereinrichtung aber keine weiteren Aufgaben ausführen. Sieht man nun aber einen Zwischenspeicher vor, der die Backware von der Fördereinrichtung des Backofens übernimmt, kann die Fördereinrichtung der Ausgabeeinrichtung in dieser Zeit weiterhin ihre Funktion ausführen. Lediglich zur Übergabe der zwischenzeitlich im Zwischenspeicher angekommenen Backware muss die Fördereinrichtung der Ausgabeeinrichtung ein leeres Trägerelement kurzzeitig zur Übergabestelle bewegen, wo diese dann stattfindet.

Eine vorteilhafte Weiterbildung der Erfindung sieht vor, dass dabei im Zwischenspeicher Speicherraum für mehrere Lebensmittel vorgesehen ist. Bildet man beispielsweise die Trägerelemente länglich aus, so dass auf einem Trägerelement gleichzeitig mehrere Lebensmittel, wie etwa Schnittbrötchen, Platz finden, ist es sinnvoll, diese Lebensmittel so lange im Zwischenspeicher anzusammeln, bis ein Trägerelement ganz oder zumindest annähernd befüllt werden kann. Dazu kann der Zwischenspeicher auch Speicherraum für mehrere verschiedene Arten von Lebensmitteln aufweisen, die dann jeweils sortiert an bereitgestellte Trägerelemente übergeben werden.

Die Ausgabeeinrichtung ist im weiteren vorteilhafterweise dadurch gekennzeichnet, dass ein manuelles Ausgabefach oder eine Befüllvorrichtung, insbesondere eine Befüllvorrichtung zur Befüllung von Tüten oder Kartonagen, vorgesehen ist. Bei der Ausgabe in ein manuelles Ausgabefach handelt es sich um eine konstruktiv besonders einfache und preiswerte Ausführungsform. Aus hygienischen Gründen und für die Kunden ansprechender ist dagegen eine Befüllvorrichtung, welche die angeforderten Lebensmittel, wie beispielsweise Brötchen, direkt in Tüten oder Kartonagen verpackt.

Um die Erkennung der ausgegebenen Lebensmittel zu erleichtern, hat es sich zudem als besonders vorteilhaft erwiesen, wenn an der Ausgabeeinrichtung eine Vorrichtung zur Erzeugung von Informationsträgern, insbesondere von Etiketten, Barcodes oder Aufdrucken, vorgesehen ist. Diese Informationsträger können dann beispielsweise an den Kassen von Supermärkten automatisch von Kassensystemen oder manuell von Kassierern eingelesen werden. Eine zeitaufwendig manuelle Erfassung der Waren, beispielsweise durch Prüfen der Warenart und Nachzählen bzw. Nachwiegen, entfällt damit. Zur Erzeugung der Informationsträger können Laser-, Tintenstrahl- oder Thermotransferdrucker zur Anwendung kommen. Die Informationen können direkt auf Verpackungen, wie beispielsweise Tüten oder Kartonagen, oder aber auf Etiketten aufgedruckt werden. Selbstverständlich ist es auch denkbar, andere Informationsträger, wie elektronische Datenträger, zu erzeugen und auf der Verpackung der Ware anzubringen bzw. separat auszugeben und vom Kunden aufbringen zu lassen.

Für einen wirtschaftlichen Betrieb der erfindungsgemäßen Vorrichtung hat es sich als besonders vorteilhaft erwiesen, wenn eine Steuerungsvorrichtung, insbesondere eine elektronische Steuerung, vorgesehen ist, die Funktionen in einem oder mehreren der Abschnitte steuert. Insbesondere programmierbare elektronische Steuerungen können bei entsprechender Programmierung auch komplexe Aufgaben mit höchster Präzision und Zuverlässigkeit erfüllen. Hierdurch ist es möglich, Personal in erheblichem Umfang einzusparen und gleichzeitig die Genauigkeit, mit der die Funktionen gesteuert werden, deutlich zu erhöhen.

Eine mögliche Funktion ist dabei die Überwachung und Steuerung der Trägerelemente. Dazu ist die Steuerungseinrichtung vorteilhafterweise mit einer Verarbeitungseinrichtung zur Verarbeitung der den Trägerelementen zugeordneten Informationen ausgestattet. Eine solche Verarbeitungseinrichtung kann beispielsweise aus einem Rechnersystem und einer zugehörigen Software bestehen, mit deren Hilfe die Art der Beladung der Trägerelemente, deren Ort innerhalb der Vorrichtung, deren Behandlungszustand und Aufenthaltsdauer verfolgt werden. Bei einem Warenabruf oder einer Überschreitung entsprechender Zeitgrenzen kann die Steuerungseinrichtung dann entsprechende Aktionen der Fördereinrichtungen bzw. der gesamten Vorrichtung veranlassen. Wie bereits zuvor angedeutet, können je nach Wunsch unterschiedliche Kriterien definiert werden. So kann ein Steuerkriterium vorsehen, dass schnellstmöglich verfügbare Trägerelement der Ausgabeeinrichtung zuzuführen oder ein anderes Steuerkriterium das Trägerelement mit der Ware der gewünschten Art, welche die längste Verweildauer in der Vorrichtung aufweist, auszugeben. Noch ein anderes Steuerkriterium kann nach dem Überschreiten einer Gesamtverweildauer den Austausch bestimmter oder aller betreffenden Waren vorsehen. Dies sind selbstverständlich nur einige Beispiele für eine Vielzahl möglicher Steuerungskriterien.

Zur besseren Verarbeitung der Informationen ist an der besagten Steuerungseinrichtung bevorzugt eine Speichereinrichtung zur Speicherung der den Trägerelementen zugeordneten Informationen vorgesehen. Vorteilhafterweise werden dazu bereits bei der Aufgabeeinrichtung derartige Informationen in der Speichereinrichtung hinterlegt. Diese Informationen können beispielsweise Art der Stückware, Uhrzeit der Aufgabe der Ware, Nummer oder Bezeichnung des beschickten Trägerelemente und ähnliches enthalten. Darüber hinaus können aber auch im Verlauf der Verarbeitung der Ware neugenerierte Informationen hinzukommen. Wird beispielsweise eine Ware von einem Trägerelement einer ersten Fördereinrichtung an ein Trägerelement einer zweiten Fördereinrichtung übergeben, so ist entsprechend der eintretende Wechsel der Bezeichnungen des Trägerelementes zu protokollieren. Erfolgt beispielsweise am Backofen eine Übergabe von einem bezeichneten Trägerelement an ein unbezeichnetes Endlosband, kann es sinnvoll sein, den genauen Übergabezeitpunkt zu protokollieren, um daraus in Verbindung mit der eingestellten Geschwindigkeit des Förderbandes und dessen Förderlänge zu jedem Zeitpunkt die aktuelle Lage der Ware oder den Abgabezeitpunkt zu berechnen.

Vorteilhafterweise weist die Steuerungseinrichtung dazu eine Zeiterfassungseinrichtung zur zeitlichen Überwachung des Durchlaufs der Trägerelemente auf.

Für eine Optimierung der Verfügbarkeit der angebotenen Lebensmittel bzw. eine Vermeidung oder Minimierung von Ausschussware ist es besonders vorteilhaft, wenn die Steuerungseinrichtung mit einem Programm zur Verbrauchsüberwachung und/oder -analyse ausgestattet ist. Dazu ist es besonders vorteilhaft, wenn beispielsweise über einfache Zählwerke oder in elektronischer Form von der Steuerungseinrichtung die Mengen der einzelnen umgesetzten Warenarten ermittelt werden. Dies kann in beliebigen Zeiteinheiten erfolgen, wie beispielsweise monatsweise, wochenweise, tageweise, stundenweise oder auch in kleineren Zeitinkrementen. Je kürzer dabei die Zeitdauer ist, während der ein behandeltes Lebensmittel als frisch anzusehen ist, und je länger die zur Zubereitung erforderliche Zeitdauer ist, um so effektiver wirkt sich eine solche Verbrauchsanalyse auf die Wirtschaftlichkeit einer erfindungsgemäßen Vorrichtung aus. So kann beispielsweise anhand der über einen gewissen Zeitraum ermittelten Erfahrungswerte für jeden Lebensmitteltyp ein durchschnittlicher Bedarf ermittelt werden. Hieraus kann dann ein Tagesbedarf abgeleitet werden, der als Grundlage für die Bestellmengen der täglich frisch zu liefernden Ware bildet. Ergibt die Analyse beispielsweise, dass ein Produkt A regelmäßig an einem ersten Wochentag 300-fach verkauft wird und an einem zweiten Wochentag 500-fach, so kann die am Vortag aufzugebende Bestellung für diesen Werktag entsprechend angepasst werden. Damit ist sichergestellt, dass in der Regel die Ware in ausreichendem Maß zur Verfügung steht und entweder gar kein oder nur sehr geringer Ausschuss anfällt. Desweiteren ist es aber auch möglich, den Tagesbedarf über den Tag verteilt exakter abzuschätzen und zu decken und den im Tagesverlauf schwankenden Bedarf zu analysieren. Ergibt eine solche Analyse beispielsweise, dass ein Produkt A zu einer nachfrageschwachen Zeit, beispielsweise zwischen 13 und 16 Uhr, nur zehn mal abgerufen wird, so macht es keinen Sinn, dieses Produkt A beispielsweise mehr als zwei- oder dreimal fertig zubereitet in einer Ausgabeeinrichtung vorzuhalten. Hierdurch wird erreicht, dass das Produkt fortlaufend frisch zubereitet bereitsteht. Steigt die Nachfrage hingegen beispielsweise ab 17 Uhr sprunghaft auf beispielsweise 200 Einheiten pro Stunde an, so kann die entsprechende Produktion mit einem zeitlichen Vorlauf von beispielsweise 15 Minuten bereits um 16:45 Uhr einsetzen und rechtzeitig bereitstehen. Besonders geeignet ist in diesem Zusammenhang der Einsatz von selbstlernenden Programmen, die in iterativen Optimierungsschritten die produzierten Mengen im Lauf der Zeit immer genauer an den tatsächlichen Bedarf annähern, ohne dass ein Bediener hierzu erforderlich ist.

Neben der schwankenden Nachfrage nach einem einzelnen Produkt, kann auf diese Weise auch die schwankende Nachfrage zwischen zwei oder mehr Produkten berücksichtigt werden. So kann beispielsweise beim Vorliegen einer Hauptnachfragezeit am Morgen und einer weiteren Hauptnachfragezeit am Abend berücksichtigt werden, wenn morgens überwiegend das Produkt A und nur wenig das Produkt B nachgefragt wird, wohingegen abends nur wenig vom Produkt A und überwiegend das Produkt B nachgefragt wird. Mit einer solchen Verbrauchsüberwachung und -analyse, die vorzugsweise ebenfalls selbstlernend, d. h. dynamisch, ausgelegt ist, kann damit die produzierte bzw. vorproduzierte Menge an Lebensmitteln in der für jeden einzelnen Verkaufsstandort individuell optimierten Weise gesteuert werden.

Für die Bedienung einer erfindungsgemäßen Vorrichtung ist es darüber hinaus vorteilhaft, wenn die Steuerungseinrichtung Ausgabemittel zur Ausgabe oder Anzeige eines vorhandenen Vorrats aufweist. Die Anzeige des Vorrats kann beispielsweise in absoluten Zahlen oder in Form einer verbleibenden Restdauer für die jeweiligen Lebensmittelarten erfolgen. Ein Bediener kann dann erkennen, wie viel Stück eines bestimmten Produktes noch vorhanden sind bzw. wie lange der vorhandene Vorrat noch ausreichen wird. Alternativ kann auch eine Signaleinrichtung im Verkaufsraum angeordnet sein, welche beispielsweise ein optisches oder akustisches Signal ausgibt, wenn Wartungs- oder Bestückungstätigkeiten an der Vorrichtung erforderlich sind. Diese Signaleinrichtung ist dabei vorteilhafterweise an eine bzw. die Steuerungseinrichtung angebunden.

Da auch Energiekosten einen signifikanten Anteil an den Betriebskosten einer erfindungsgemäßen Vorrichtung ausmachen, ist es besonders günstig, wenn die Steuerungseinrichtung mit dem Backofen verbunden ist, um daran angeordnete Heizvorrichtungen zeitweise still zu setzen. Damit kann bei längeren nachfragelosen bzw. nachfragearmen Zeiten der Energieverbrauch der Vorrichtung deutlich gesenkt werden.

Eine andere vorteilhafte Ausgestaltung der Erfindung sieht vor, dass zumindest die Förderrichtung der Fördereinrichtung der Ausgabeeinrichtung von der Steuerungseinrichtung wahlweise steuerbar ist. Besteht die Fördereinrichtung beispielsweise aus einer Förderkette und befindet sich das abgerufene Produkt auf einem Trägerelement, welches die Ausgabestelle gerade passiert hat, so wäre es bei einer unidirektionalen Bewegung erforderlich, das Trägerelement einen kompletten Durchlauf ausführen zu lassen. Hat die Steuerungseinrichtung nun aber die Möglichkeit, eine Richtungsumkehr der Trägerelemente zu veranlassen, so kann sie zunächst feststellen, in welcher Laufrichtung das Trägerelement die kürzeste Laufzeit bis zur Ausgabestelle benötigt und dann die entsprechende Bewegung des Trägerelements veranlassen.

Vorgenannte Aspekte zu den Steuerungsmöglichkeiten der Vorrichtung können auch als separate Erfindungsaspekte angesehen werden, sind also nicht auf die erfindungsgemäßen Lösungen entsprechend der unabhängigen Ansprüche beschränkt.

Zur Erleichterung der Bedienung und zur Einsparung von Bedienzeit ist es besonders vorteilhaft, wenn Mittel zum automatisierten Entleeren wenigstens eines Abschnittes vorgesehen sind. So ist es beispielsweise bei Geschäftsschluss erforderlich, die unfertigen oder halbfertigen Lebensmittel aus der Aufgabeeinrichtung zu entnehmen. Anstatt dies manuell durchzuführen, kann an der Aufgabeeinrichtung eine Öffnung vorgesehen sein, an der diese nach entsprechender Bedienung automatisch alle noch in der zugehörigen Fördereinrichtung befindlichen Lebensmittel ausgibt. Diese können dann beispielsweise in einem Kühlraum bis zum nächsten Tag verwahrt und dann erneut aufgegeben werden. Gleiches gilt auch für Fertigprodukte, die sich bei Ladenschluss noch in der Fördereinrichtung oder sonstigen Speichereinrichtungen der Ausgabeeinrichtung befinden. Hierbei ist es dann wahlweise möglich, die Ausgabe über den üblicherweise vorgesehenen Ausgabeweg oder ebenfalls über eine separate Sammelausgabe vorzusehen.

Neben der Entleerung der Vorrichtung ist vorteilhafterweise vorgesehen, dass eine Reinigungseinrichtung zumindest die Trägerelemente reinigt. Dabei kann die Reinigungseinrichtung so ausgelegt sein, dass sie vor ihr zum Stillstand kommende leere Trägerelemente oder vorbeifahrende leere Trägerelemente einzeln reinigt. Dies kann durch Druckluft oder Bürsten geschehen. Eine andere mögliche Ausführungsform sieht vor, dass die Reinigungsvorrichtung erst nach der kompletten Entleerung des zu reinigenden Abschnitts aktiviert wird und dann sämtliche Trägerelemente reinigt. Eine solche Reinigung kann auch wieder automatisiert werden und beispielsweise während der Nachtzeiten erfolgen. Bei der Durchführung von Reinigungstätigkeiten an Abschnitten ohne Lebensmittel ist es auch möglich, Reinigungsflüssigkeit bzw. Wasser in Strahlform einzusetzen.

Für die Haltbarkeit der Lebensmittel hat es sich als besonders vorteilhaft erwiesen, wenn wenigstens ein Abschnitt klimatisiert ist. So ist es in der Regel vorteilhaft, die unbehandelten oder halbfertigen Lebensmittel zu kühlen, wohingegen bei fertigbehandelten Produkten, wie beispielsweise Backwaren, eine Trocknung bzw. ein Nachbacken sinnvoll sein kann. Demzufolge kann eine Klimatisierung je nach Bedarf in einer Kühlung, Erwärmung, Befeuchtung oder Entfeuchtung bestehen.

Zur besonders schnellen Ausgabe verschiedener Lebensmitteltypen hat es sich als vorteilhaft erwiesen, wenn die Ausgabeeinrichtung je Produkt ein Ausgabeband aufweist. Während beispielsweise verschiedene Lebensmitteltypen mittels einer einzigen Fördereinrichtung zur Ausgabeeinrichtung hin oder innerhalb derer befördert werden, ist es mit den einzelnen Ausgabebändern möglich, diese wieder nach Lebensmittelart getrennt zu sortieren. Der Vorteil liegt in der Zeitersparnis, da bei einer Anforderung eines Produktes A nur das mit dem Produkt A bestückte Ausgabeband in Gang gesetzt und ausschließlich ein Produkt des gewünschten Typs gefördert wird.

Bei besonders großen Unterschieden in der angeforderten Stückzahl oder besonders großen Unterschiede hinsichtlich der geometrischen Abmessung der Produkte ist es vorteilhaft, wenn die Ausgabeeinrichtung je Produkt eine Ausgabestelle aufweist. So kann beispielsweise eine Ausgabestelle hinsichtlich der Ausgabe von länglichem Baguettebrot optimiert werden, wohingegen eine andere Ausgabestelle auf die geometrischen Abmessungen von Schnittbrötchen hin optimiert ausgelegt ist.

Zur möglichst weitgehenden Automatisierung der erfindungsgemäßen Vorrichtung kann vorteilhafterweise vorgesehen sein, dass eine elektronische Eingabeeinrichtung zur Eingabe der gewünschten Produktart und Menge vorgesehen ist. Im einfachsten Fall kann dies durch mehrmaliges Betätigen eines Schalters erfolgen, wobei die Anzahl der Betätigungen der Anzahl der gewünschten Menge entspricht und der Schalter selbst die Produktart wiedergibt. Es sind aber auch andere Lösungen möglich, wie beispielsweise Schalter, mit denen die Förderung des gewünschten Produktes angestellt und nach Erreichen der gewünschten Fördermenge wieder abgestellt wird. Weiterhin ist es denkbar, eine Tastatur vorzusehen, über die die Menge und Art eingegeben wird oder Münz- oder Kartenlesegeräte, wobei anhand der Münzen oder Karten oder sonstiger Informationsträger die Art und Menge der gewünschten Produkte erkennbar ist.

Neben der Aufstellung einer erfindungsgemäßen Vorrichtung innerhalb von Verkaufsräumen ist es auch denkbar, lediglich die Ausgabeeinrichtung an einer Gebäudeaußenseite anzuordnen. In diesem Fall kann ein Straßenverkauf bewerkstelligt werden.

Als vorteilhaft ist auch anzusehen, wenn eine Eingabeeinrichtung zur Eingabe von Zahlungsmitteln oder von kundenabhängigen Informationen vorgesehen ist. Diese kundenabhängigen Informationen können beispielsweise in Form von Kontodaten, Bargeldeinheiten, Namen und Passwörter, Vorbestellungsnummern oder Entnahmemengen umfassen. Damit können beispielsweise Gastronomen oder Hotelbesitzer unabhängig von Ladenöffnungszeiten auf frische Lebensmittel zugreifen. Eine Abrechnung kann dann etwa über vorher eingerichtetes Konto erfolgen. Daneben ist es aber auch möglich, die Produkte über die Ausgabeeinrichtung an normale Straßenkundschaft, beispielsweise gegen Barzahlung oder Kartenzahlung, abzugeben.

Schließlich hat es sich als verkaufsfördernd und damit als vorteilhaft erwiesen, wenn eine Luftführungseinrichtung vorgesehen ist, die Luft aus der Ausgabeeinrichtung und/oder dem Backofen zumindest zeitweise in den Verkaufsraum leitet. Beispielsweise durch den Geruch von frisch zubereiteten Backwaren, den ein Kunde in der Regel sehr intensiv wahrnimmt, wird dieser auf das Vorhandensein von Backwaren hingewiesen. Dies fördert den Absatz der Produkte und sorgt für eine von der Allgemeinheit als angenehm empfundene Duftkulisse. Um eine Belästigung der Kundschaft im Verkaufsbereich durch eine zu intensive Duftkulisse oder durch zu hohe Temperaturen, wie sie beispielsweise im Sommer auftreten, zu vermeiden, ist vorgesehen, dass die Luft aus der Ausgabeeinrichtung über einen zweiten Weg ableitbar ist, der nicht in den Verkaufsbereich führt und vorzugsweise auf möglichst direktem Weg ins Freie mündet.

Weitere Vorteile der Erfindung ergeben sich aus den zugehörigen Unteransprüchen oder sind im Zusammenhang mit den nachfolgenden Ausführungsbeispielen und der Zeichnung beschrieben. Es zeigt darin:
- **Figur 1**: eine erfindungsgemäße Vorrichtung in einer seitlichen Schnittansicht;
- **Figur 2**: eine weitere Ausführungsform einer erfindungsgemäßen Vorrichtung in einer seitlichen Schnittansicht;
- **Figur 3**: eine dritte Ausführungsform einer erfindungsgemäßen Ausgabeeinrichtung in einer Frontansicht;
- **Figur 4**: eine seitliche Schnittansicht einer vierten Ausführungsform einer erfindungsgemäßen Vorrichtung;
- **Figur 5**: eine seitlichen Schnittansicht einer fünfte Ausführungsform einer erfindungsgemäßen Vorrichtung;
- **Figur 6**: eine Seitenansicht auf eine erfindungsgemäße Aufgabeeinrichtung;
- **Figur 7**: die Aufgabeeinrichtung nach Figur 6 mit anderer Bestückung, und
- **Figur 8**: eine teilweise Seitenansicht einer Fördereinrichtung mit verschwenkbaren Trägerelementen.

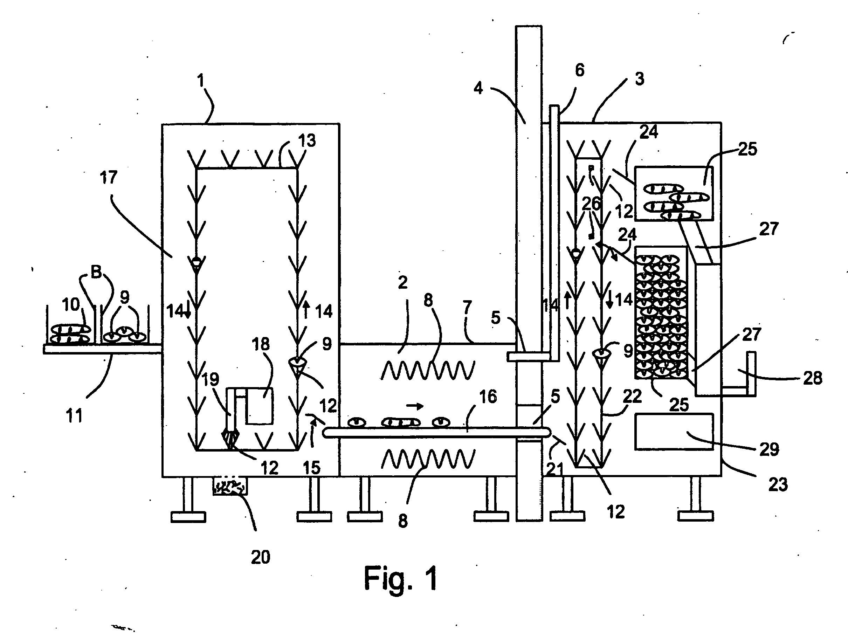

In Figur 1 ist eine erfindungsgemäße Vorrichtung zur Lagerung, Behandlung und Ausgabe von Lebensmitteln in einer seitlichen Schnittansicht dargestellt. Die vorliegende Vorrichtung besteht aus drei Abschnitten 1, 2, 3. Zwischen dem zweiten Abschnitt 2 und dem dritten Abschnitt 3 ist ein bautechnisches Trennmittel in Form einer Wand 4 angeordnet. Die Wand 4 weist zwei Verbindungsöffnungen 5 auf, durch die der zweite Abschnitt 2 und der dritte Abschnitt 3 miteinander verbunden sind. In der oberen Verbindungsöffnung 5 erstreckt sich ein Luftabzugsrohr 6, das im zweiten Abschnitt 2 entstehende Abluft zur Oberseite des dritten Abschnittes 3 abführt. Der zweite Abschnitt 2 ist bei der dargestellten Ausführungsform ein Durchlaufbackofen 7, der decken- und bodenseitig mit Heizungswendeln 8 ausgestattet ist. Für die Erfindung ist es dabei vollkommen unerheblich, ob die Heizung elektrisch, per Gas oder in sonstiger Weise betrieben ist.

Besonders gut erkennbar ist in der vorliegenden Figur, dass erheblicher Bauraum in einem rechts der Wand 4 liegenden Verkaufsbereich eingespart wird. Statt dessen werden die im Verkaufsbereich nicht benötigten Vorrichtungen in einen linksseitig der Wand 4 liegenden Bereich verlegt. Dies kann beispielsweise ein Lagerraum oder sonstige außerhalb des Verkaufsbereiches liegende und nicht allgemein zugängliche Räumlichkeiten sein. Es wird dadurch Verkaufsraum im erheblichen Maß eingespart und Verschmutzungen des Verkaufsraumes, wie sie beispielsweise beim Bestücken der Vorrichtung auftreten, entfallen.

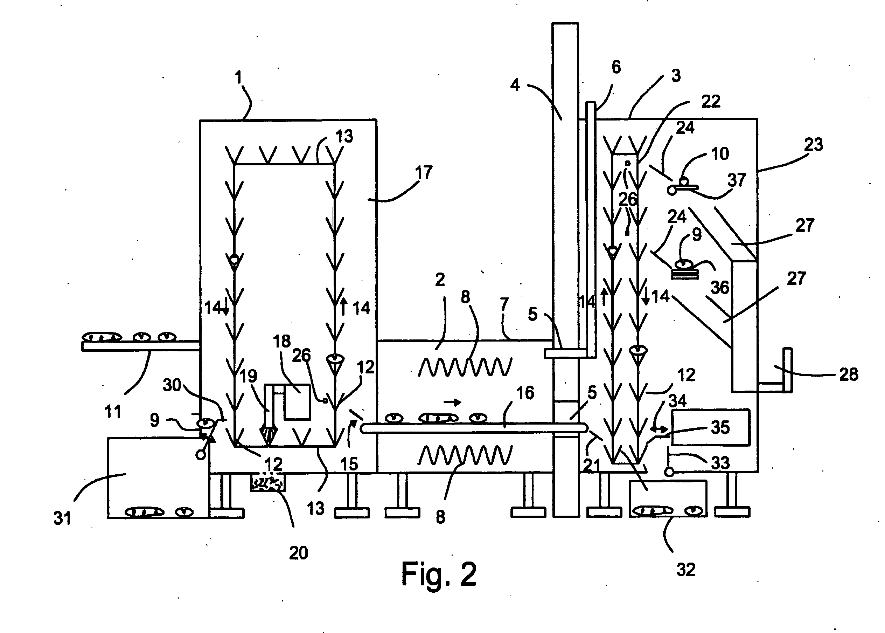

Die Funktionsweise sieht prinzipiell einen Durchlauf von Lebensmitteln von links nach rechts vor. Die Lebensmittel in dem vorliegenden Fall sind Schnittbrötchen 9 und Baguettebrote 10. Sie werden auf einem Aufgabetisch 11 vorgelegt (gemäß der Figur 1 in Behältern B, gemäß der Figur 2 einzeln) und anschließend gemäß der Erfindung manuell in Trägerelemente 12 einer umlaufenden Fördereinrichtung 13 eingelegt. Die hier dargestellten Trägerelemente 12 weisen eine V-Form auf und sind damit zur Aufnahme unterschiedlichster Backwaren geeignet. Sie können aber auch beispielsweise in Form von Körben oder anderen geeigneten Aufnahmebehältern ausgebildet sein. Die Fördereinrichtung 13 ist vorzugsweise als Förderkette ausgebildet, die sich in Richtung der Pfeile 14 bewegt. Gelangt nun ein Trägerelement 12 zu einer Rampe 15, so bleibt es im Verlauf der Auswärtsbewegung an der Rampe 15 hängen, dreht sich um seinen Befestigungspunkt an der Fördereinrichtung 13 nach rechts weg und kippt die aufgeladene Backware über die Rampe 15 auf eine zweite Fördereinrichtung in Form eines Backbandes 16, das sich durch den Durchlaufbackofen 7 erstreckt. Die Fördereinrichtung 13 ist innerhalb eines Gehäuses angeordnet, welches eine Aufgabeeinrichtung 17 bildet. In der dargestellten Ausführungsform durchläuft die Fördereinrichtung 13 einen einfachen Durchlauf. Sie kann dabei aber auch beispielsweise mäandrieren und so die Speicherkapazität der Trägerelemente 12 durch Vergrößerung der Länge der Fördereinrichtung 13 deutlich erhöhen.

Um beispielsweise nach einer Anforderung des auf der rechten Seite der Fördereinrichtung 13 dargestellten Brötchens 9 nicht einen kompletten Umlauf in Richtung der Pfeile 14 durchlaufen zu müssen, ist die Bewegungsrichtung der Fördereinrichtung 13 zeitweise auch umschaltbar. Vorliegend bedeutet dies, dass das Trägerelement 12, auf dem das Brötchen 9 liegt, zunächst um zwei Positionen nach unten und anschließend wieder nach oben bewegt wird, um das Trägerelement 12 an der Rampe 15 zu entleeren.

Zur Reinigung der Trägerelemente 12 ist innerhalb der Aufgabeeinrichtung 17 eine Reinigungsvorrichtung 18 mit einer beweglichen Bürste 19 vorgesehen. Gelangt nun unterhalb der Bürste 19 ein leeres Trägerelement 12 zum Stehen, so leitet die Reinigungsvorrichtung 18 eine Reinigung ein und die dabei anfallenden Verschmutzungen sammeln sich in einem Sammelbehälter 20, der an der Unterseite der Aufgabeeinrichtung 17 angeordnet ist. Im weiteren Verlauf wird das auf dem Backband 16 befindliche Backgut durch die untere Verbindungsöffnung 5 zu einer zweiten Rampe 21 transportiert, von wo es vereinzelt in die Trägerelemente 12 einer zweiten Fördereinrichtung 22 gelangt. Die zweite Fördereinrichtung 22 befindet sich dabei innerhalb einer Ausgabeeinrichtung 23, die rechtsseitig der Wand 4 in einem vorgesehenen Verkaufsbereich liegt. Die zweite Fördereinrichtung 22 kann, wie zuvor, entweder in Richtung der Pfeile 14 oder in entgegengesetzter Richtung verfahren werden. Die Trägerelemente 12 gelangen dann an Abgaberampen 24, die zu Speichern 25 führen. Innerhalb der Speicher 25 werden nur Backwaren jeweils eines Typs angesammelt. Gelangt beispielsweise ein Schnittbrötchen 9 im Bereich der unteren Abgaberampe 24 auf gleiche Höhe mit einem Auswerfer 26, so bewegt sich dieser nach rechts, kippt das Trägerelement 12 und entleert damit das Schnittbrötchen 9 auf die untere Ausgaberampe 24, von wo es in den Speicher 25 fällt. In ähnlicher Weise geschieht die Abgabe der Baguettebrote 10 an der darüber liegenden Abgaberampe 24. Die Ausgabe der Backwaren erfolgt bei der hier gezeigten Ausführungsform über Schächte 27 in ein manuelles Ausgabefach 28. Hierzu können beispielsweise an den Schächten 27 geeignete Vereinzelungseinrichtungen vorgesehen sein, die je nach Anforderung durch einen Kunden eine entsprechende Anzahl von Backwaren des gewünschten Typs abgeben. Im unteren Bereich der Ausgabeeinrichtung 23 ist noch eine Steuerungseinrichtung 29 angeordnet, die Funktionen der Vorrichtung, beispielsweise mittels einer elektronischen Steuereinrichtung, überwacht. Mögliche Funktionen, welche von der Steuerungseinrichtung 29 überwacht werden, sind der Antrieb der Fördereinrichtungen 13, 22, die Steuerung der Auswerfer, Steuerung der Reinigungsvorrichtung, Steuerung der an den Schächten 27 angeordneten Vereinzelungsvorrichtungen und die Verfolgung der einzelnen Trägerelemente 12 sowie Überwachung der jeweiligen Beladungszustände. Hierzu besitzt jedes Trägerelement 12 eine eigene Kennzeichnung. Diesem Kennzeichen wird die Information über den Beladungszustand bzw. Art der beladenen Ware hinzugefügt und zusammen mit der Information über die Verfahrstellung der Fördereinrichtungen 13, 22 kann die Steuerungseinrichtung die Position jedes Trägerelementes 12 und damit auch der beladenen Backware bestimmen. Zusätzlich ist es hilfreich, Zeitinformationen, beispielsweise über den Belade- und Entladezeitpunkt eines Trägerelementes 12, zu erfassen. Diese können dann innerhalb einer Speichervorrichtung, die beispielsweise an die Steuerungseinrichtung 29 angeschlossen ist, hinterlegt werden. Damit kann eine Ansteuerung des Backbandes 16 durch die Steuerungseinrichtung 29 entfallen. Wird nämlich das Backgut zu einem Zeitpunkt x₀ an das Backband 16 abgegeben und weist das Backband 16 eine konstante Durchlaufzeit y auf, so kann die Steuerung berechnen, dass das jeweilige Backgut zum Zeitpunkt x₀+y an der zweiten Rampe 21 ankommt.

Die Figur 2 zeigt eine andere Ausführungsform einer erfindungsgemäßen Vorrichtung, wiederum in einer seitlichen Schnittdarstellung. Die drei Abschnitte 1, 2, 3 sind dabei wie zuvor relativ zur Wand 4 angeordnet. Die Beladung der Fördereinrichtung 13 erfolgt in der bereits zuvor beschriebenen Weise. Zur Entladung der Trägerelemente 12 ist nun aber auch an der Fördereinrichtung 13 ein Auswerfer 26 vorgesehen, der die Backwaren auf die Rampe 15 kippt. Zusätzlich ist an der Aufgabeeinrichtung 17 eine automatische Entleerung vorgesehen. Diese kann beispielsweise nach Ladenschluss erforderlich werden, um die noch in der Aufgabeeinrichtung 17 befindlichen Backwaren für den Verkauf am nächsten Tag zu entnehmen und kühl zu stellen. In diesem Fall wird eine Klappe 30 durch Rechtsschwenken aus ihrer vertikalen Position in eine Offenstellung gebracht. Läuft nun die Fördereinrichtung 13 entgegen der Pfeilrichtung 14, so bleibt jedes Trägerelement 12 an dem nach rechts vorstehenden Kragen der Klappe 30 hängen, verschwenkt daraufhin nach links und gibt das gegebenenfalls darauf befindliche Backgut ab. Die Backwaren fallen dann, wie gezeigt, durch eine Öffnung im Gehäuse in einen Frischgutbehälter 31. Gleichzeitig ist auch an der Ausgabeeinrichtung 23 eine automatische Entleerung vorgesehen. Dazu befindet sich unterhalb der Ausgabeeinrichtung 23 ein Altgutbehälter 32, in den das abgegebene Altgebäck durch eine Klappe 33 fällt. Die Betätigung der Trägerelemente 12 der Fördereinrichtung 22 erfolgt über einen in Richtung eines Pfeils 34 verstellbaren Arm 35. Ist der Arm 35 nach links ausgefahren und wird die Fördereinrichtung entgegen der Pfeile 14 bewegt, so verschwenken auch bei dieser Fördereinrichtung 22 die Trägerelemente nach rechts und geben das gegebenenfalls darauf befindliche Backgut frei, so dass es in den Altgutbehälter 32 gelangt.

Neben der gezeigten Betätigung der Trägerelemente 12 ist es aber selbstverständlich auch möglich, andere Ausführungsformen zu verwenden, wie beispielsweise die zuvor beschriebenen Auswerfer 26.

Die Lagerung des Backgutes nach der Abgabe aus den Trägerelementen 12 der Fördereinrichtung 22 innerhalb der Ausgabeeinrichtung 23 unterscheidet sich gegenüber der in Figur 1 dargestellten Ausführungsform dadurch, dass die Schnittbrötchen 9 auf einem sich in normaler Richtung zur Bildebene erstreckenden Ausgabeband 36 liegen. Nach dem Wegschwenken der Trägerelemente 12 gelangen diese über die Abgaberampe 24 auf das Ausgabeband 36. Dort sind sie hintereinanderliegend angeordnet. Bei Bedarf wird dann das Abgabeband 36 in Bewegung versetzt und das jeweils zuerst liegende Brötchen 9 fällt zuerst in den darunter liegenden Schacht 27 und anschließend in die manuelle Ausgabe 28. Für die Speicherung des Baguettebrotes 10 ist darüber eine Ausgabeklappe 37 schwenkbar angeordnet. Dabei gelangt das aus dem Trägerelement 12 über die Abgaberampe 24 zugeführte Baguettebrot 10 auf die zunächst horizontal ausgerichtete Ausgabeklappe 37. Wahlweise kann die Ausgabeklappe 37 auch die Form eines V- oder U-Profils aufweisen, um das Baguettebrot 10 vor einem seitlichen Herabfallen zu schützen. Nach einer Anforderung des Baguettebrotes 10 wird die Ausgabeklappe 37 dann lediglich nach unten geschwenkt und das Baguettebrot 10 fällt über den oberen Schacht 27 ebenfalls in die manuelle Ausgabe 28.

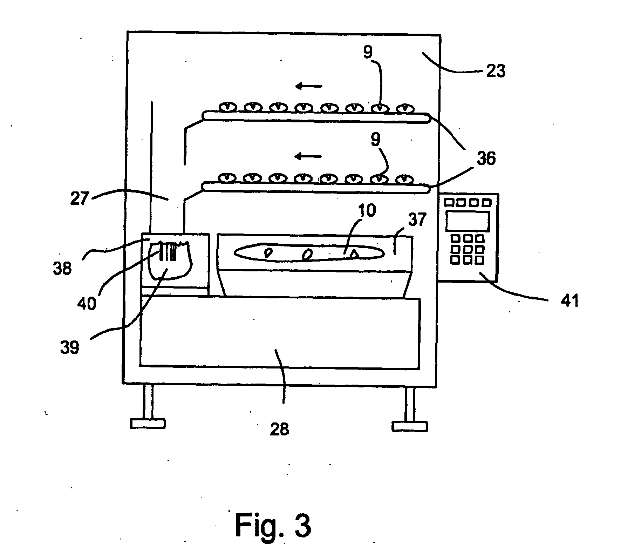

In Figur 3 ist eine Ausgabeeinrichtung 23 in einer Frontansicht dargestellt. Die dahinterliegenden Verbindungsöffnungen werden von der im Verkaufsbereich liegenden Ausgabeeinrichtung 23 vollständig verdeckt. Bei dieser Ausführungsform weist die Ausgabeeinrichtung 23 zwei übereinanderliegende Ausgabebänder 36 für Schnittbrötchen 9 auf. Die zuvor beschriebene Ausgabeklappe 37 für Baguettebrot 10 ist bei dieser Ausführungsform unterhalb der Ausgabebänder 36 angeordnet. Bei einer Anforderung von Schnittbrötchen 9 transportiert das Ausgabeband 36 diese in Pfeilrichtung nach links, von wo sie über den Schacht 27 in eine Verpackungseinrichtung 38 gelangen. Dort werden sie in eine Tüte 39 befördert. Gleichzeitig wird auf der Tüte 39 ein Informationsträger in Form eines Barcodes 40 aufgebracht. In ähnlicher Weise kann auch das Baguettebrot 10 in eine Papiertüte oder Kartonage verpackt und ausgegeben werden. Bei der dargestellten Ausführungsform wird das Baguettebrot 10 allerdings direkt in das manuelle Ausgabefach 28 freigegeben. An der rechten Seite der Ausgabeeinrichtung 23 befindet sich noch eine Eingabeeinheit 41, über die der Kunde die gewünschte Art und Anzahl von Backwaren eingeben kann. Daneben kann die Eingabeeinheit aber auch Zahlungsfunktion, z. B. für Bargeld oder Kartenzahlungen, übernehmen oder sonstige Datenträger oder Schlüssel einlesen.

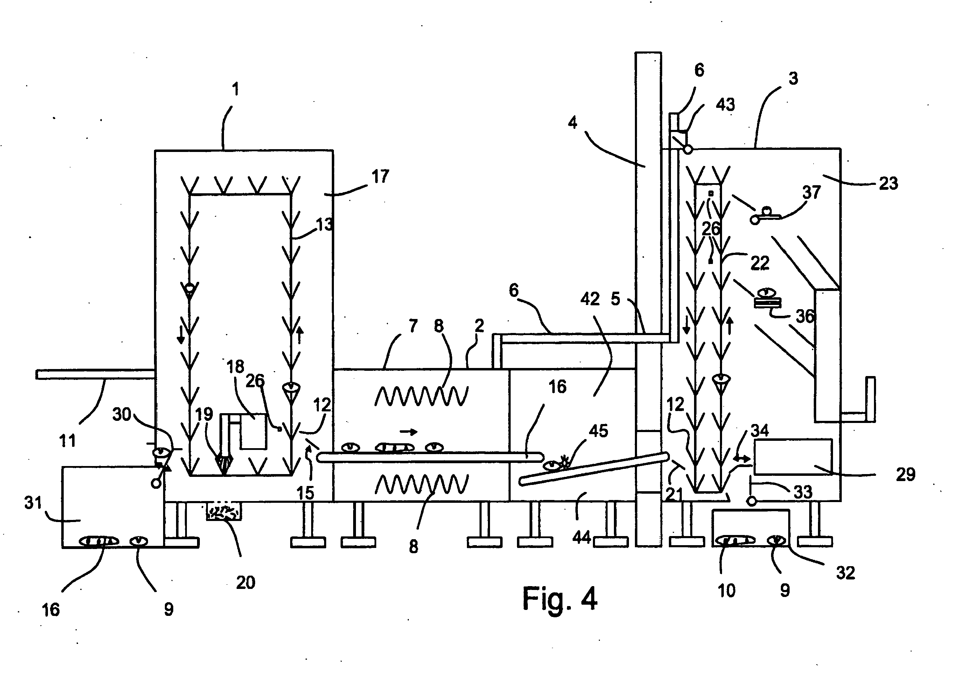

Die Figur 4 zeigt eine erfindungsgemäße Vorrichtung bestehend aus vier Abschnitten 1, 2, 3, 42. Die Führung des Luftabzugsrohres 6 ist dahingehend abgeändert, dass sie nicht direkt vom Durchlaufbackofen 7, sondern oberhalb des vierten Abschnittes 42 zur Wand 4 verläuft. An der Oberseite der Ausgabeeinrichtung 23 ist eine Luftklappe 43 angeordnet, über die im geöffneten Zustand die im Durchlaufbackofen 7 erzeugten Abluftmengen in den Verkaufsbereich geleitet werden. Zusätzlich eingefügt wurde der vierte Abschnitt 42, um als Puffer zwischen dem zweiten und dem dritten Abschnitt zu dienen. Der als Zwischenspeicher 44 ausgebildete vierte Abschnitt 42 wirkt hier als zeitlicher Puffer zwischen dem Durchlaufbackofen 7 und der Ausgabeeinrichtung 23. Es kommt in der Praxis nämlich vor, dass trotz der genauen Erfassung des Abgabezeitpunktes der Backware aus den Trägerelementen 12 der Fördereinrichtung 23 der Aufgabeeinrichtung 17 und einer genau bekannten Durchlaufzeit des Backgutes auf dem Backband 16 dieses nur mit einer gewissen zeitlichen Toleranz abgegeben wird. Bei einer direkten Übergabe vom Backband 16 an die Trägerelemente 12 der Fördereinrichtung 22 müssten damit das jeweils zu befüllende Trägerelement 12 und damit die gesamte Fördereinrichtung 23 während der gesamten Dauer dieses Zeitfensters in der Übergangsstellung verharren, um sicherzustellen, dass das jeweilige Backgut auch angekommen ist. Während dieser Zeit ist die Fördereinrichtung 22 aber nicht in der Lage, beispielsweise die Speicher 25 oder die Ausgabebänder 36 bzw. Ausgabeklappen 37 zu versorgen. Nutzt man nun den Zwischenspeicher 44, so kann etwa mittels einer Lichtschranke 45 das Vorhandensein des Backgutes exakt erfasst und dieses anschließend in sehr kurzer Zeit über die Rampe 15 an die Trägerelemente 12 der Fördereinrichtung 12 übergeben werden. Hierdurch reduziert sich die Stillstandzeit der Fördereinrichtung 12 erheblich.

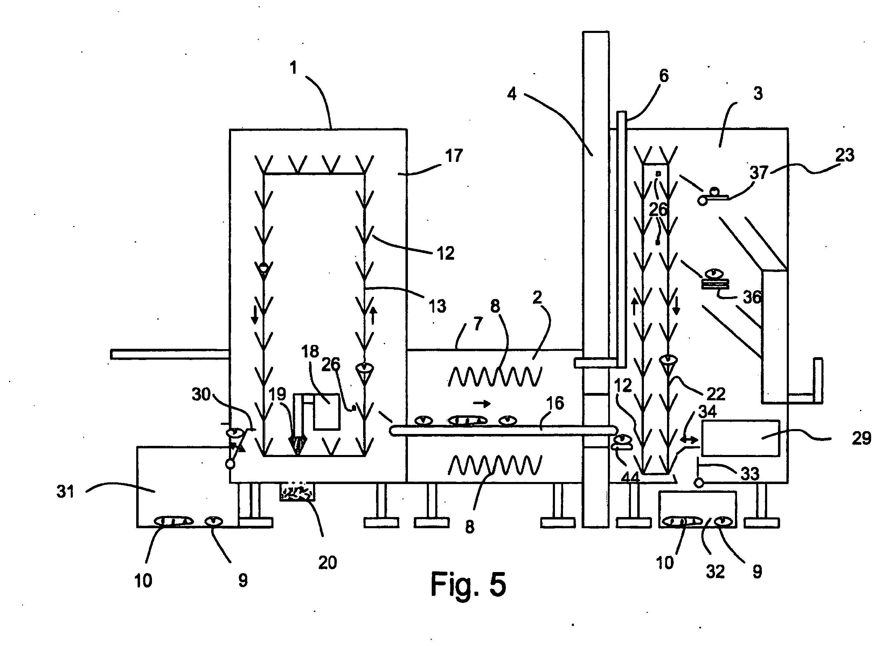

In Figur 5 ist eine Ausführungsform mit drei Abschnitten 1, 2, 3 gezeigt, deren Funktionsweise und Einzelheiten weitestgehend zuvor bereits beschrieben sind. Diese besondere Ausführungsform weist zusätzlich noch einen in die Ausgabeeinrichtung 23 integrierten Zwischenspeicher 44 auf. Das vom Backband 16 abgegebene Backgut wird dabei innerhalb eines Zeitfensters für den Durchlauf durch den Durchlaufbackofen 7 auf ein ebenfalls umlaufendes Band des Zwischenspeichers 44 abgegeben. Das Vorhandensein des Backgutes kann dann mittels üblicher Sensoren, wie beispielsweise Lichtschranken oder Ultraschallsensoren, festgestellt werden. Liegt das Backgut im Zwischenspeicher 44 bereit, kann das nächste verfügbare Trägerelement 12 der Fördereinrichtung 22 damit bestückt werden. Dies geschieht durch Verfahren des umlaufenden Bandes des Zwischenspeichers 44 in entsprechender Richtung. Alternativ kann der Einsatz von Sensoren zur Feststellung der Anwesenheit von Backgut auch entfallen, wenn im Zwischenspeicher 44 das Umlaufband stets erst nach dem Verstreichen des längstmöglichen Zeitfensters in Gang gesetzt wird. Dann ist nämlich ebenfalls sichergestellt, dass sich das Backgut im Zwischenspeicher 44 befindet.

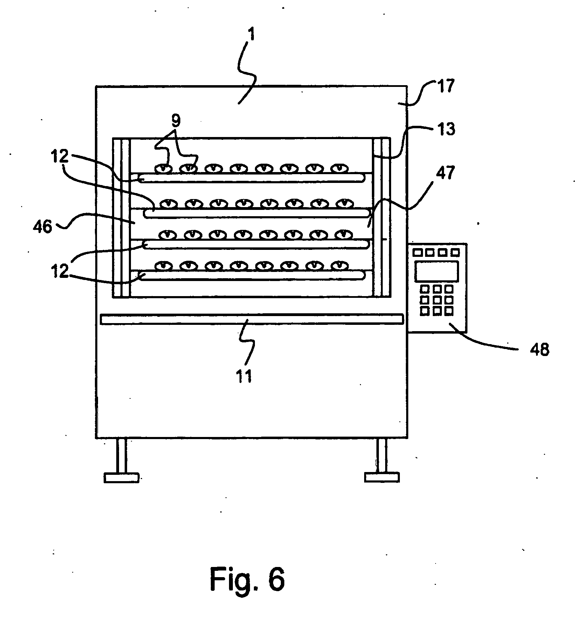

Die Figur 6 zeigt den als Aufgabeeinrichtung 17 ausgebildeten ersten Abschnitt 1. Eine Beladestelle 46 ermöglicht den gleichzeitigen Zugriff auf vier Trägerelemente 12. Auf den Trägerelementen 12 befinden sich Backwaren in Form von Schnittbrötchen 9, die erfindungsgemäß vereinzelt auf die Trägerelemente 12 aufgelegt sind. Vorliegend werden die Brötchen 9 - Beispiel für Kleinbackwaren - nebeneinander einreihig auf die sich über die Breite der Aufgabeeinrichtung 17 erstreckenden Trägerelemente 12 gelegt.

Die Trägerelemente 12 sind über Drehachsen 47 an die Fördereinrichtung 13 angebunden. An der rechten Seite der Aufgabeeinrichtung 17 befindet sich eine Anzeige-/Eingabevorrichtung 48. Unterhalb der Beladestelle 46 ist der Aufgabetisch 11 angeordnet, auf dem auch Behälter B mit den vom Bedienpersonal an der Beladestelle 46 einzulegenden Backwaren abgestellt werden können (s. Figur 1).

In dem dargestellten Zustand ist die Beladestelle 46 geöffnet dargestellt. In diesem Zustand erfolgt die Bestückung der Vorrichtung. In der übrigen Zeit ist die Beladestelle 46 beispielsweise durch ein einsteckbares Wandelement oder eine Schiebetür bzw. automatisch verfahrende Tür verschlossen.

Das Bedienpersonal führt die Bestückung durch, indem es manuell die Brötchen aus einem Lieferbehälter auf die Trägerelemente 12 auflegt. Die Anzeige-/Eingabevorrichtung kann dabei in zweierlei Weise genutzt werden. Bei der ersten Arbeitsweise liest der Bediener von der Anzeige der Anzeige-/Eingabevorrichtung 48 die zu bestückende Art der Backwaren aus und bestückt die Trägerelemente 12 entsprechend. Bei der zweiten Arbeitsweise bestückt der Bediener die Trägerelemente 12 nach seiner Wahl und gibt über die Eingabevorrichtung 48 der Steuerung die entsprechende Information über die Art bzw. Menge der bestückten Backwaren an.

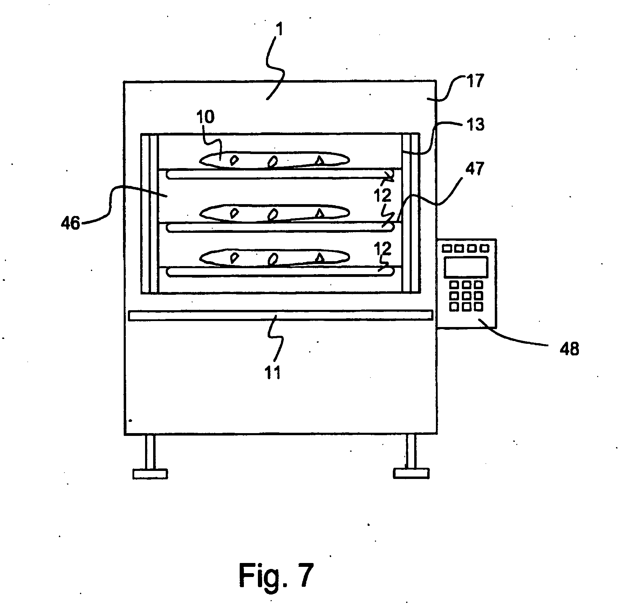

In Figur 7 ist die Aufgabeeinrichtung 17 nach Figur 6 nochmals dargestellt. Gegenüber der Figur 6 hat sich jedoch die Art der bestückten Backwaren geändert. Es handelt sich hierbei um Großbackwaren und im speziellen um Baguettebrote 10, welche auf drei - gegenüber den Trägerelementen 12 der Figur 6 vertikal größer beabstandete - Trägerelemente 12 aufgelegt sind. Die gegenüber den Brötchen 9 höheren Baguettebrote 10 sind dabei ebenso wie die in Figur 6 gezeigten Schnittbrötchen 9 entlang der Längsrichtung der Trägerelemente 12 ausgerichtet.

Da die Trägerelemente 12 für Großbackwaren 10 vorliegend einen unterschiedlichen Abstand voneinander haben als die Trägerelemente 12 für Kleinbackwaren 9, ist es vorteilhaft, wenn über die Anzeige-/Eingabevorrichtung 48 die entsprechend passenden Trägerelemente 12 durch Eingabe von beispielsweise einem Symbol für Klein- oder Großbackwaren 9 bzw. 10 herbeigerufen werden können. Je nach Wahl werden dann vier Trägerelemente 12 für Kleinbackwaren 9 (Figur 6) oder drei Trägerelemente 12 für Großbackwaren 10 zur Beladestelle 46 vorgefahren. Diese Zahlen sind selbstverständlich nur beispielhafte Angaben.

Die Trägerelemente 12 für einerseits Klein- und andererseits Großbackwaren können unterschiedlich breit ausgebildet sein, da diese Backwaren in aller Regel auch selbst unterschiedliche Breiten aufweisen.

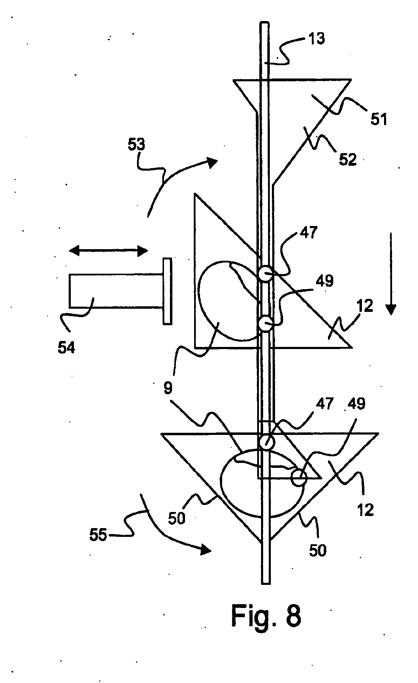

Die Figur 8 schließlich zeigt eine erfindungsgemäße Fördereinrichtung 13 mit schwenkbaren Trägerelementen 12. Bei der Fördereinrichtung 13 handelt es sich um ein vertikal verlaufendes Förderband bzw. eine vertikal verlaufende Förderkette, an welcher die V-förmig ausgebildeten Trägerelemente 12 mittels der Drehachse 47 drehbar befestigt sind. Zusätzlich weisen diese Trägerelemente 12 Führungsstifte 49 auf. Die Funktionsweise der Fördereinrichtung 13 sieht eine durchlaufende Bewegung der Trägerelemente 12 von oben nach unten vor. Im normalen Transportzustand sind die Trägerelemente 12 V-förmig angeordnet. In dieser Stellung befindet sich das untere der beiden dargestellten Trägerelemente 12. Dabei bilden die beiden seitlichen Auflageflächen 50 ein V, in dem das Schnittbrötchen 9 aufliegt. Gelangt nun ein Trägerelement in dieser Stellung von oben in einen Trichter 51, so wird der Führungsstift 49 durch die Seitenfläche 52 des Trichters in Richtung der Drehachse 47 gedrückt und das Trägerelement 12 führt ein Rechtsdrehung in Richtung des Pfeils 53 um die Drehachse 47 aus. In der gezeigten Stellung kann dann beispielsweise mittels eines Schiebers 54 das einzelne Brötchen 9 oder eine Mehrzahl von Brötchen 9 vom Trägerelement 12 nach rechts abgestoßen werden. Verfährt das Trägerelement 12 dann weiter nach unten, schwenkt dieses mit einer Linksdrehung um die Drehachse 47 in Richtung des Pfeils 55 zurück in seine Ausgangsposition. Mit der gezeigten Überführung der Trägerelemente 12 von einer Transportposition in eine Be- bzw. Entladeposition und zurück ist ein sicherer Transport der Backwaren durch die gesamte Vorrichtung gewährleistet. Gleichzeitig können die Backwaren an den gewünschten Stellen leicht be- und entladen werden, da die Trägerelemente 12 in entsprechend günstige Stellungen verfahrbar sind. Ein unbeabsichtigtes Herabfallen von Backwaren, beispielsweise auf den Transport innerhalb der Vorrichtung, kann zu erheblichen Störungen des Betriebs führen, wird jedoch durch die vorliegende Ausführungsform der Trägerelemente wirksam vermieden. Im Ergebnis führt dies somit zu einem besonders zuverlässigen Betrieb der erfindungsgemäßen Vorrichtung.

Die vorliegende Erfindung ist nicht auf die dargestellten Ausführungsbeispiele beschränkt. Es sind vielmehr zahlreiche Abwandlungen im Rahmen der Patentansprüche möglich. So kann beispielsweise die dargestellte bauliche Trennung in Form der Wand zwischen dem ersten und zweiten Abschnitt liegen, aber auch zwischen dem zweiten und dritten oder beliebigen anderen Abschnitten. Darüber hinaus versteht der Fachmann, dass neben den dargestellten Transport- und Fördereinrichtungen zahlreiche andere Ausführungsformen und -arten bekannt und geeignet sind, um eine Verbindung durch die Verbindungsöffnung 5 zwischen den Abschnitten herzustellen. In besonders einfachen Ausgestaltungen kann auch nur eine einzige Fördereinrichtung für alle Abschnitte vorgesehen sein. Auch können die Trägerelemente in unterschiedlichster Weise hergestellt werden, wie z.B. als Drahtkörbe, Metallgussteil oder Kunststoffteile aus hitzebeständigem Kunststoff. Neben der beschriebenen Verwendung der erfindungsgemäßen Vorrichtung für Backwaren kann sie aber auch im Zusammenhang mit anderen Waren, wie etwa Wurstware, Lebensmittelkonserven, Fertiggerichten und ähnlichem eingesetzt werden. Zudem ist es möglich, die Auslegung der erfindungsgemäßen Vorrichtung sowie die Anwendung des erfindungsgemäßen Verfahrens durch die Verwendung unterschiedlicher Trägerelemente in verschiedenen Abschnitten und die Übergabe der Lebensmittel zwischen diesen Trägerelementen an die jeweilige Anwendungssituation besonders gut anzupassen.

Im übrigen können beschriebene Ausführungsbeispiele auch als separate Erfindungsaspekte angesehen werden, die demnach unabhängig von den beanspruchten Erfindungsaspekten einstufbar sind.

## Patentansprüche

1. Vorrichtung zur Lagerung, Behandlung und Ausgabe von Backwaren (9, 10), mit einem als Aufgabeeinrichtung (17) ausgebildeten Abschnitt (1), einem als Durchlaufbackofen (7) ausgebildeten Abschnitt (2) und einem als Ausgabeeinrichtung (23) ausgebildeten Abschnitt (3), wobei die Aufgabeeinrichtung (17) eine Beladestelle (46) mit mehreren Trägerelementen (12) für die Bestückung seitens einer Bedienperson aufweist und wobei die Trägerelemente (12) der Aufgabeeinrichtung (17) verfahrbar und umlaufend ausgebildet sind, **dadurch gekennzeichnet, dass** die Trägerelemente (12) der Aufgabeeinrichtung (17) zum manuellen Auflegen von Backwaren (9, 10) in vereinzelter Form vorgesehen und für die Bedienperson zur entsprechenden Bestückung erreichbar sind, und dass die unterschiedlichen Backwaren (9, 10) von der Ausgabeeinrichtung (23) nach Kundenabruf einzeln ausgebbar sind, wobei an der Beladestelle (46) eine mit einer Steuereinrichtung (29) verbundene Anzeige- und/oder Eingabeeinrichtung (48) angeordnet ist, die derart ausgebildet ist, dass sie der Bedienperson bei der manuellen Bestückung der Trägerelemente (12) vorgibt, welche Art von Backwaren in welcher Menge zu bestücken sind, und/oder die Eingabeeinrichtung (48) der Bedienperson ermöglicht, die Art bzw. Menge der von ihr manuell auf die Trägerelemente (12) aufgelegten Backwaren an die Steuereinrichtung (29) zu übermitteln.

2. Vorrichtung nach einem der vorhergehenden Ansprüche, **dadurch gekennzeichnet, dass** die Trägerelemente (12) als vorzugsweise schwenkbar gelagerte, längliche Körbe ausgebildet sind.

3. Vorrichtung nach einem der vorhergehenden Ansprüche, **dadurch gekennzeichnet, dass** die Trägerelemente (12) zur Aufnahme von Kleinbackwaren, wie etwa Brötchen (9), und Großbackwaren, wie etwa Broten (10), ausgebildet sind.

4. Vorrichtung nach einem der vorhergehenden Ansprüche, **dadurch gekennzeichnet, dass** die Trägerelemente (12) für Kleinbackwaren (9) einerseits und für Großbackwaren (10) andererseits unterschiedlich breit ausgebildet sind.

5. Vorrichtung nach einem der vorhergehenden Ansprüche, **dadurch gekennzeichnet, dass** die Trägerelemente (12) jeweils zur vorzugsweise einreihigen Aufnahme der Backwaren (9, 10) in Längserstreckung der Trägerelemente (12) ausgebildet sind.

6. Vorrichtung nach einem der vorhergehenden Ansprüche, **dadurch gekennzeichnet, dass** eine Antriebseinrichtung vorgesehen ist, welche die Trägerelemente (12) zwischen wenigstens einer Transportstellung und einer Be- bzw. Entladestellung bewegt.

7. Vorrichtung nach einem der vorhergehenden Ansprüche, **dadurch gekennzeichnet, dass** Fördereinrichtungen (13, 16, 22) vorgesehen sind, welche die in der Längsrichtung der Trägerelemente (12) angeordneten Backwaren (9, 10) unter Beibehaltung der Relativlage zueinander durch die gesamte Vorrichtung bis zum Kundenabruf an der Ausgabeeinrichtung (23) fördern.

8. Vorrichtung nach einem der vorhergehenden Ansprüche, **dadurch gekennzeichnet, dass** zumindest zwischen zwei Abschnitten (2, 3) ein bautechnisches Trennmittel (4), insbesondere eine Wand (4), mit einer oder mehreren Verbindungsöffnungen (5) angeordnet ist, wobei zumindest ein Abschnitt (3) in einem Verkaufsbereich angeordnet ist.

9. Vorrichtung nach Anspruch 8, **dadurch gekennzeichnet, dass** die wenigstens eine in dem Trennmittel (4) vorgesehene Verbindungsöffnung (5) innerhalb einer von dem wenigstens einen verkaufsbereichseitigen Abschnitt (3) überdeckten Fläche liegt.

10. Vorrichtung nach einem der vorhergehenden Ansprüche, dadurch genkennzeichnet, dass wenigstens zwei unabhängig voneinander steuerbare Fördereinrichtungen (13, 22) vorgesehen sind.

11. Vorrichtung nach einem der vorhergehenden Ansprüche, **dadurch gekennzeichnet, dass** die wenigstens zwei Fördereinrichtungen (13, 22) jeweils eine Mehrzahl von Trägerelementen (12) aufweisen.

12. Vorrichtung nach einem der vorhergehenden Ansprüche, **dadurch gekennzeichnet, dass** jedem Trägerelement (12) wenigstens eine Information zugeordnet ist, insbesondere eine Information über Laufzeit, Art der Beladung oder den momentanen Standort.

13. Vorrichtung nach einem der vorhergehenden Ansprüche, **dadurch gekennzeichnet, dass** zwischen einer Fördereinrichtung (16) an einem als Backofen ausgebildeten Abschnitt (2) und einer Fördereinrichtung (22) an einem als Ausgabeeinrichtung (23) ausgebildeten Abschnitt (3) ein Zwischenspeicher (44) vorgesehen ist.

14. Vorrichtung nach einem der vorhergehenden Ansprüche, **dadurch gekennzeichnet, dass** an der Ausgabeeinrichtung (23) ein manuelles Ausgabefach (28) oder eine Befüllvorrichtung (38), insbesondere eine Befüllvorrichtung zur Befüllung von Tüten (39) oder Kartonagen, vorgesehen ist.

15. Vorrichtung nach einem der vorhergehenden Ansprüche, **dadurch gekennzeichnet, dass** eine Steuerungseinrichtung (29), insbesondere eine elektronische Steuerung, vorgesehen ist, die Funktionen in einem oder mehreren der Abschnitte (1, 2, 3) steuert.

16. Vorrichtung nach einem der vorhergehenden Ansprüche, **dadurch gekennzeichnet, dass** die Steuerungseinrichtung (29) eine Verarbeitungseinrichtung zur Verarbeitung der den Trägerelementen (12) zugeordneten Informationen aufweist.

17. Vorrichtung nach einem der vorhergehenden Ansprüche, **dadurch gekennzeichnet, dass** die Steuerungseinrichtung (29) mit einem Programm zur Verbrauchsüberwachung und/oder -analyse ausgestattet ist.

18. Vorrichtung nach einem der vorhergehenden Ansprüche, **dadurch gekennzeichnet, dass** die Steuerungseinrichtung (29) Anzeigemittel zur Anzeige eines vorhandenen Vorrats an Backwaren (9, 10) aufweist.

19. Vorrichtung nach einem der vorhergehenden Ansprüche, **dadurch gekennzeichnet, dass** die Steuerungseinrichtung (29) mit dem Durchlaufbackofen verbunden ist, um eine daran angeordnete Heizvorrichtung (8) zeitweise stillzusetzen.

20. Vorrichtung nach einem der vorhergehenden Ansprüche, **dadurch gekennzeichnet, dass** Mittel (30, 33) zum automatisierten Entleeren der Aufgabe- und/oder der Ausgabeeinrichtung (17, 23) vorgesehen sind.

21. Vorrichtung nach einem der vorhergehenden Ansprüche, **dadurch gekennzeichnet, dass** eine Reinigungseinrichtung (18) vorgesehen ist, die zumindest die Trägerelemente (12) reinigt.

22. Vorrichtung nach einem der vorhergehenden Ansprüche, **dadurch gekennzeichnet, dass** wenigstens ein Abschnitt (1, 2, 3) klimatisiert ist.

23. Vorrichtung nach einem der vorhergehenden Ansprüche, **dadurch gekennzeichnet, dass** die Ausgabeeinrichtung (23) je Produkt ein Ausgabeband (36) oder eine Ausgabeklappe (37) aufweist.

24. Vorrichtung nach einem der vorhergehenden Ansprüche, **dadurch gekennzeichnet, dass** eine elektronische Eingabeeinrichtung (41) zur Eingabe der gewünschten Produktart und Menge vorgesehen ist.

25. Vorrichtung nach einem der vorhergehenden Ansprüche, **dadurch gekennzeichnet, dass** eine Eingabeeinrichtung (41) zur Eingabe von Zahlungsmitteln oder kundenabhängigen Informationen vorgesehen ist.

26. Vorrichtung nach einem der vorhergehenden Ansprüche, **dadurch gekennzeichnet, dass** eine Luftführungseinrichtung (6) vorgesehen ist, die Luft aus der Ausgabeeinrichtung (23) und/oder dem Durchlaufbackofen zumindest zeitweise in den Verkaufsbereich leitet.

27. Verfahren zur Lagerung, Behandlung und Ausgabe von Backwaren (9, 10), bei dem die Backwaren (9, 10) an einer Beladestelle (46) einer Aufgabeeinrichtung (17) auf umlaufende verfahrbare Trägerelemente (12) aufgebracht werden, welche zur Förderung der Backwaren (9, 10) zu einem nachgeschalteten Durchlaufbackofen (7) dienen, die Backwaren (9, 10) in dem Durchlaufbackofen (7) gebacken und mittels einer Ausgabeeinrichtung (23) ausgegeben werden, **dadurch gekennzeichnet, dass** unterschiedliche Backwaren (9, 10) von einer Bedienperson in die Trägerelemente (12) eingelegt werden, wobei alle Backwaren manuell und in vereinzelter Form eingelegt werden, und dass die unterschiedlichen Backwaren (9, 10) von der Ausgabeeinrichtung (23) auf Kundenabruf einzeln ausgebbar sind, wobei der Bedienperson an der Beladestelle (46) über eine mit einer Steuereinrichtung (29) verbundene Anzeige- und/oder Eingabeeinrichtung (48) vorgegeben wird, welche Art von Backwaren in welcher Menge zu bestücken sind, und/oder die Bedienperson über die Eingabeeinrichtung (48) die Art bzw. Menge der von ihr manuell auf die Trägerelemente (12) aufgelegten Backwaren an die Steuereinrichtung (29) übermittelt.

28. Verfahren nach dem vorhergehenden Verfahrensanspruch, **dadurch gekennzeichnet, dass** auch Großbackwaren (10) in Trägerelemente (12), ggf. solche anderer geometrischer Größe als diejenigen für die Kleinbackwaren (9), von einer Bedienperson eingelegt werden.

29. Verfahren nach einem der vorhergehenden Verfahrensansprüche, **dadurch gekennzeichnet, dass** die Backwaren (9, 10) jeweils eines Trägerelements (12) beim Backen und bis zum Kundenabruf an der Ausgabeeinrichtung unter ständiger Beibehaltung ihrer Relativlage verarbeitet und transportiert werden.

30. Verfahren nach einem der vorhergehenden Verfahrensansprüche, **dadurch gekennzeichnet, dass** die Backwaren (9, 10) in Längsrichtung der Trägerelemente (12) ausgerichtet in die Vorrichtung aufgegeben werden.

31. Verfahren nach einem der vorhergehenden Verfahrensansprüche, **dadurch gekennzeichnet, dass** an einer Beladestelle (46) gleichzeitig eine Mehrzahl von Trägerelementen (12) bereitgestellt wird, vorzugsweise übereinander.

32. Verfahren nach einem der vorhergehenden Verfahrensansprüche, **dadurch gekennzeichnet, dass** jedes der bereitgestellten Trägerelemente (12) mit jeweils gleichen Backwaren (9,10) beladen wird.

33. Verfahren nach einem der vorhergehenden Verfahrensansprüche, **dadurch gekennzeichnet, dass** die Lagerung, Behandlung und Ausgabe nacheinander in wenigstens zwei räumlich getrennten Abschnitten (2, 3) einer Vorrichtung, insbesondere einer Vorrichtung nach einem der vor hergehenden Ansprüche, durchgeführt wird, wobei die Abschnitte (2, 3) beiderseits eines bautechnischen Trennmittels (4) angeordnet sind.

34. Verfahren nach einem der vorhergehenden Verfahrensansprüche, **dadurch gekennzeichnet, dass** die Backwaren (9, 10) zwischen zwei Abschnitten (2, 3) in einem Pufferspeicher (44) zwischengespeichert werden.

35. Verfahren nach einem der vorhergehenden Verfahrensansprüche, **dadurch gekennzeichnet, dass** die Backwaren (9, 10) je nach Anforderung in mindestens einem der Abschnitte (1, 2, 3) klimatisiert werden.

36. Verfahren nach einem der vorhergehenden Verfahrensansprüche, **dadurch gekennzeichnet, dass** Informationen über Art, Menge oder Zeitpunkt des Backwarendurchsatzes erfasst werden, wobei diese Informationen vorzugsweise ausgewertet und die Ergebnisse zur Steuerung der Vorrichtung verwendet werden,

37. Verfahren nach einem der vorhergehenden Verfahrensansprüche, **dadurch gekennzeichnet, dass** bei der Zubereitung anfallende Geruchsstoffe zusammen mit der umgebenden Luft zumindest zeitweise in den Verkaufsbereich abgegeben werden.

38. Verfahren nach einem der vorhergehenden Verfahrensansprüche, **dadurch gekennzeichnet, dass** die Vorrichtung bei hohem Speicherfüllstand bzw. geringem oder gar keinem Backwarenmittelabruf unmittelbar oder zeitversetzt zumindest teilweise stillgesetzt wird.

## Claims

1. A device for storing, handling, and dispensing bakery products (9, 10) having a segment (1) implemented as a loading device (17), a segment (2) implemented as a conveyor oven (7), and a segment (3) implemented as a discharge device (23), the loading device (17) comprising a loading site (46) having a plurality of carrier elements (12) for loading by an operator and the carrier elements (12) of the loading device (17) being implemented as transportable and circulating elements, **characterized in that** the carrier elements (12) of the loading device (17) are provided for manually and individually placing different bakery products (9, 10) and can be reached by the operator for loading accordingly, and that the different bakery products (9, 10) can be discharged individually by the discharge device (23) when requested by a customer, wherein a display and/or input device (48) connected to a controller (29) is disposed at the loading site (46) and implemented such that the device specifies to the operator which type of bakery products in which quantity are to be loaded when manually loading the carrier elements (12), and/or the input device (48) allows the operator to transmit to the controller (29) the type and the quantity, respectively, of the bakery products manually placed on the carrier elements (12).

2. The device according to the preceding claim, **characterized in that** the carrier elements (12) are implemented as preferably pivotally supported elongated baskets.

3. The device according to any one of the preceding claims, **characterized in that** the carrier elements (12) are implemented for receiving small bakery products, such as rolls (9), and large bakery products, such as loaves of bread (10).

4. The device according to any one of the preceding claims, **characterized in that** the carrier elements (12) are implemented having different widths for small bakery products (9) and for large bakery products (10).

5. The device according to any one of the preceding claims, **characterized in that** the carrier elements (12) are each implemented for preferably single-row receiving of the bakery products (9, 10) in the longitudinal direction of the carrier elements (12).

6. The device according to any one of the preceding claims, **characterized in that** a drive device is provided for moving the carrier elements (12) between at least one transport position and one loading or unloading position.

7. The device according to any one of the preceding claims, **characterized in that** conveyor devices (13, 16, 22) are provided for conveying the bakery products (9, 10) disposed in the longitudinal direction of the carrier elements (12) through the entire device up to the customer request at the discharge device (23) while retaining the relative positions of the goods.

8. The device according to any one of the preceding claims, **characterized in that** a building partition (4), particularly a wall (4), having one or more connecting openings (5) is disposed between at least two segments (2, 3), wherein at least one segment (3) is disposed in a sales area.

9. The device according to claim 8, **characterized in that** the at least one connecting opening (5) provided in the partition (4) lies within an area covered by the at least one segment (3) on the sales area side.

10. The device according to any one of the preceding claims, **characterized in that** at least two conveyor devices (13, 22) that can be controlled independently of each other are provided.

11. The device according to any one of the preceding claims, **characterized in that** the at least two conveyor devices (13, 22) each comprise a plurality of carrier elements (12).

12. The device according to any one of the preceding claims, **characterized in that** each carrier element (12) is associated with at least one piece of information, particularly information about the elapsed time, type of loading, or the current location.

13. The device according to any one of the preceding claims, **characterized in that** a buffer (44) is provided between a conveyor device (16) at a segment (2) implemented as a baking oven and a conveyor device (22) at a segment (3) implemented as a discharge device (23).

14. The device according to any one of the preceding claims, **characterized in that** a manual discharge bin (28) or a filling device (38), particularly a filling device for filling sacks (39) or cartons, is provided at the discharge device (23).

15. The device according to any one of the preceding claims, **characterized in that** a controller (29), particularly an electronic controller, is provided for controlling the functions in one or more of the segments (1, 2, 3).

16. The device according to any one of the preceding claims, **characterized in that** the controller (29) comprises a processing device for processing the information associated with the carrier elements (12).

17. The device according to any one of the preceding claims, **characterized in that** the controller (29) is equipped with a program for monitoring and/or analyzing consumption.

18. The device according to any one of the preceding claims, **characterized in that** the controller (29) comprises display means for displaying stock on hand of bakery products (9, 10).

19. The device according to any one of the preceding claims, **characterized in that** the controller (29) is connected to the conveyor oven for temporarily shutting down a heating device (8) disposed thereon.

20. The device according to any one of the preceding claims, **characterized in that** means (30, 33) are provided for automatically emptying the loading and/or discharge device (17, 23).

21. The device according to any one of the preceding claims, **characterized in that** a cleaning device (18) is provided for cleaning at least the carrier elements (12).

22. The device according to any one of the preceding claims, **characterized in that** at least one segment (1, 2, 3) is air-conditioned.

23. The device according to any one of the preceding claims, **characterized in that** the discharge device (23) comprises one discharge belt (36) or one discharge flap (37) for each product.

24. The device according to any one of the preceding claims, **characterized in that** an electronic input device (41) is provided for entering the desired type and quantity of product.

25. The device according to any one of the preceding claims, **characterized in that** an input device (41) is provided for inputting means of payment or customer-related information.

26. The device according to any one of the preceding claims, **characterized in that** an air guiding device (6) is provided for at least temporarily guiding air from the output device (23) and/or the conveyor oven into the sales area.

27. A method for storing, handling, and discharge of bakery products (9, 10), the bakery products (9, 10) being placed on circulating displaceable carrier elements (12) at a loading point (46) of a loading device (17), said elements (12) serving for conveying the bakery products (9, 10) to a conveyor oven (7) connected downstream, the bakery products (9, 10) being baked in the conveyor oven (7) and discharged by means of a discharge device (23), **characterized in that** different bakery products (9, 10) are placed in the carrier elements (12) by an operator, wherein all bakery products are placed manually and individually, and that the different bakery products (9, 10) can be dispensed individually per customer request by the discharge device (23), wherein the operator at the loading point (46) is instructed by means of a display and/or input device (48) connected to a controller (29) what type and quantity of bakery products are to be loaded, and/or the operator transmits to the controller (29) by means of the input device (48) the type and quantity of bakery products placed manually on the carrier elements (12).

28. The method according to the preceding method claim, **characterized in that** large bakery products (10) can also be placed by an operator in carrier elements (12), optionally having a different geometric size than those for the small bakery products (9).

29. The method according to any one of the preceding method claims, **characterized in that** the bakery products (9, 10) of each carrier element (12) are processed and transported with continuously maintaining their relative position during baking and until the customer request at the discharge device.

30. The method according to any one of the preceding method claims, **characterized in that** the bakery products (9, 10) are placed in the device aligned in the longitudinal direction of the carrier elements (12).

31. The method according to any one of the preceding method claims, **characterized in that** a plurality of carrier elements (12) are made available simultaneously at a loading site (46), preferably one above the other.

32. The method according to any one of the preceding method claims, **characterized in that** each of the carrier elements (12) made available is loaded with the same bakery products (9, 10) in each.

33. The method according to any one of the preceding method claims, **characterized in that** the storing, handling, and discharging are performed in sequence in at least two spatially separated segments (2, 3) of a device, particularly a device according to one of the preceding claims, wherein the segments (2, 3) are disposed on either side of a building partition (4).

34. The method according to any one of the preceding method claims, **characterized in that** the bakery products (9, 10) are temporarily stored in a buffer (44) between two segments (2, 3).

35. The method according to any one of the preceding method claims, **characterized in that** the bakery products (9, 10) in at least one of the segments (1, 2, 3) are air-conditioned, depending on the requirements.

36. The method according to any one of the preceding method claims, **characterized in that** information about the type, quantity, or time of the bakery products throughput is captured, wherein said information is preferably evaluated and the results used for controlling the device.

37. The method according to any one of the preceding method claims, **characterized in that** odor materials arising from the preparation are discharged at least temporarily together with ambient air into the sales area.

38. The method according to any one of the preceding method claims, **characterized in that** the device is at least partially stopped, either immediately or after a time, when the buffer level is high or very few or no bakery products are requested.

## Revendications

1. Dispositif pour stocker, traiter et sortir des produits de boulangerie et de pâtisserie (9, 10), avec une section (1) se présentant sous la forme d'un dispositif d'alimentation (17), une section (2) se présentant sous la forme d'un four tunnel (7) et une section (3) se présentant sous la forme d'un dispositif de sortie (23), dans lequel le dispositif d'alimentation (17) présente un poste de chargement (46) avec plusieurs éléments porteurs (12) pour le chargement par une personne de commande et dans lequel les éléments porteurs (12) du dispositif d'alimentation (17) se présentent sous une forme déplaçable et circonférentielle, **caractérisé en ce que** les éléments porteurs (12) du dispositif d'alimentation (17) sont prévus pour la pose manuelle de différents produits de boulangerie et de pâtisserie (9, 10) sous forme individuelle et accessibles pour la personne de commande en vue du chargement respectif, et que les différents produits de boulangerie et de pâtisserie (9, 10) peuvent être sortis individuellement par l'unité de sortie (23) après un appel de la part d'un client, sachant qu'une unité d'affichage et/ou de saisie (48) reliée à une unité de commande (29) est disposée au poste de chargement (46), qui se présente sous une forme telle qu'elle impose à la personne de commande, lors du chargement manuel des éléments porteurs (12), quel type de produits de boulangerie et de pâtisserie doit être chargé et en quelle quantité, et/ou que la unité de saisie (48) permette à la personne de commande de communiquer à l'unité de commande (29) le type respectivement la quantité de produits de boulangerie et de pâtisserie qu'elle a posés manuellement sur les éléments porteurs (12).

2. Dispositif selon la revendication précédente, **caractérisé en ce que** les éléments porteurs (12) se présentent de préférence sous la forme de paniers oblongs montés sur palier pivotant.

3. Dispositif selon l'une des revendications précédentes, **caractérisé en ce que** les éléments porteurs (12) se présentent sous une forme leur permettant d'accueillir de petits produits de boulangerie et de pâtisserie, tels que des petits pains (9), et de grands produits de boulangerie et de pâtisserie, tels des pains (10).

4. Dispositif selon l'une des revendications précédentes, **caractérisé en ce que** les éléments porteurs (12) se présentent sous une forme avec une largeur différente pour, d'une part, les petits produits de boulangerie et de pâtisserie (9) et, d'autre part, les produits de boulangerie et de pâtisserie de grande taille (10).

5. Dispositif selon l'une des revendications précédentes, **caractérisé en ce que** les éléments porteurs (12) se présentent respectivement sous une forme leur permettant d'accueillir les produits de boulangerie et de pâtisserie (9, 10) de préférence en une rangée, dans le sens longitudinal des éléments porteurs (12).

6. Dispositif selon l'une des revendications précédentes, caractérisé en ce qu'il est prévu un dispositif d'entraînement, qui déplace les éléments porteurs (12) entre au moins une position de transport et une position de chargement ou de déchargement.

7. Dispositif selon l'une des revendications précédentes, **caractérisé en ce que** des dispositifs de transport (13, 16, 22) sont prévus, qui transportent les produits de boulangerie et de pâtisserie (9, 10) disposés dans le sens longitudinal des éléments porteurs (12) à travers tout le dispositif, jusqu'à l'appel par le client au dispositif de sortie (23), en maintenant leur position relative les uns par rapport aux autres.

8. Dispositif selon l'une des revendications précédentes, caractérisé en ce qu'un moyen de séparation constructif (4), en particulier une paroi (4), avec une ou plusieurs ouvertures de liaison (5), est disposé entre au moins deux sections (2, 3), sachant qu'une section (3) au moins est disposée dans un espace de vente.

9. Dispositif selon la revendication 8, **caractérisé en ce que** l'au moins une ouverture de liaison (5) prévue dans le moyen de séparation (4) est située au sein d'une surface recouverte par l'au moins une section du côté d'espace de vente (3).

10. Dispositif selon l'une des revendications précédentes, **caractérisé en ce que** deux dispositifs de transport (13, 22) au moins commandables indépendamment l'un de l'autre sont prévus.

11. Dispositif selon l'une des revendications précédentes, **caractérisé en ce que** les au moins deux dispositifs de transport (13, 22) présentent respectivement une multitude d'éléments porteurs (12).

12. Dispositif selon l'une des revendications précédentes, caractérisé en ce qu'une information au moins, en particulier une information sur la durée de parcours, le type de chargement ou l'emplacement momentané, est attribuée à chaque élément porteur (12).

13. Dispositif selon l'une des revendications précédentes, **caractérisé en ce qu'**un magasin intermédiaire (44) est prévu entre un dispositif de transport (16) dans une section (2) se présentant sous la forme d'un four et un dispositif de transport (22) dans une section (3) se présentant sous la forme d'un dispositif de sortie (23).

14. Dispositif selon l'une des revendications précédentes, caractérisé en ce qu'un compartiment de sortie manuel (28) ou un dispositif de remplissage (38), en particulier un dispositif de remplissage pour le remplissage de sachets (39) ou de cartonnages, est prévu au dispositif de sortie (23).

15. Dispositif selon l'une des revendications précédentes, caractérisé en ce qu'il est prévu une unité de commande (29), en particulier une commande électronique, qui commande des fonctions dans l'une ou plusieurs des sections (1, 2, 3).

16. Dispositif selon l'une des revendications précédentes, **caractérisé en ce que** l'unité de commande (29) comporte une unité de traitement pour le traitement des informations attribuées aux éléments porteurs (12).

17. Dispositif selon l'une des revendications précédentes, **caractérisé en ce que** l'unité de commande (29) est équipée d'un programme pour la surveillance et/ou l'analyse de la consommation.

18. Dispositif selon l'une des revendications précédentes, **caractérisé en ce que** l'unité de commande (29) comporte des moyens d'affichage pour afficher un stock de produits de boulangerie et de pâtisserie (9, 10) existant.

19. Dispositif selon l'une des revendications précédentes, **caractérisé en ce que** l'unité de commande (29) est reliée au four tunnel pour arrêter temporairement un dispositif de chauffe (8) qui y est disposé.

20. Dispositif selon l'une des revendications précédentes, **caractérisé en ce que** des moyens (30, 33) pour le vidage automatisé du dispositif d'alimentation et/ou du dispositif de sortie (17, 23) sont prévus.

21. Dispositif selon l'une des revendications précédentes, caractérisé en ce qu'il est prévu un dispositif de nettoyage (18), qui nettoie au moins les éléments porteurs (12).

22. Dispositif selon l'une des revendications précédentes, caractérisé en ce qu'une section (1, 2, 3) au moins est climatisée.

23. Dispositif selon l'une des revendications précédentes, **caractérisé en ce que** le dispositif de sortie (23) présente pour chaque produit une bande de sortie (36) ou un volet de sortie (37).

24. Dispositif selon l'une des revendications précédentes, caractérisé en ce qu'il est prévu un dispositif de saisie électronique (41) pour la saisie du type de produit et de la quantité souhaités.

25. Dispositif selon l'une des revendications précédentes, caractérisé en ce qu'il est prévu un dispositif de saisie (41) pour la saisie de moyens de paiement ou d'informations dépendantes du client.

26. Dispositif selon l'une des revendications précédentes, caractérisé en ce qu'il est prévu un dispositif de guidage d'air (6), refoule l'air au moins temporairement depuis le dispositif de sortie (23) et/ou le four tunnel dans l'espace de vente.

27. Procédé pour stocker, traiter et distribuer des produits de boulangerie et de pâtisserie (9, 10), dans lequel les produits de boulangerie et de pâtisserie (9, 10) sont chargés à un poste de chargement (46) d'un dispositif de chargement (17) sur des éléments porteurs (12) circonférentiels déplaçables, qui servent au transport des produits de boulangerie et de pâtisserie (9, 10) dans un four tunnel (7) disposé en aval, les produits de boulangerie et de pâtisserie (9, 10) sont cuits dans le four tunnel (7) et sortis par un dispositif de sortie (23), **caractérisé en ce que** différents produits de boulangerie et de pâtisserie (9, 10) sont placés sur les éléments porteurs (12) par une personne de commande, sachant que tous les produits de boulangerie et de pâtisserie (9, 10) y sont placés manuellement et sous forme individuelle, et que les différents produits de boulangerie et de pâtisserie (9, 10) peuvent être sortis individuellement par le dispositif de sortie (23) sur appel du client, sachant qu'au poste de chargement (46), un dispositif d'affichage et/ou de saisie (48) relié à une unité de commande (29) impose à la personne de commande quel type de produits de boulangerie et de pâtisserie doit être chargé en quelle quantité, et/ou la personne de commande, via l'unité de saisie (48), transmet à l'unité de commande (29) le type ou la quantité de produits de boulangerie ou de pâtisserie qu'elle a manuellement posé sur les éléments porteurs (12).

28. Procédé selon la revendication de procédé précédente, **caractérisé en ce que** des produits de boulangerie et de pâtisserie de grande taille (10) peuvent également être mis en place sur des éléments porteurs (12) par une personne de commande, le cas échéant, sur des éléments porteurs (12) présentant une taille géométrique différente de celles des éléments porteurs (12) pour les petits produits de boulangerie et de pâtisserie (9).

29. Procédé selon l'une des revendications de procédé précédentes, **caractérisé en ce que** les produits de boulangerie et de pâtisserie (9, 10) respectifs d'un élément porteur (12) sont traités et transportés dans le maintien permanent de leur position relative les uns par rapport aux autres lors de la cuisson au four et jusqu'à l'appel par le client au dispositif de sortie.

30. Procédé selon l'une des revendications de procédé précédentes, **caractérisé en ce que** les produits de boulangerie et de pâtisserie (9, 10) sont chargés dans le dispositif orientés dans le sens longitudinal des éléments porteurs (12).

31. Procédé selon l'une des revendications de procédé précédentes, **caractérisé en ce que** plusieurs éléments porteurs (12) sont simultanément mis à disposition à un poste de chargement (46), de préférence les uns au-dessus des autres.

32. Procédé selon l'une des revendications de procédé précédentes, **caractérisé en ce que** chacun des éléments porteurs (12) mis à disposition est chargé chaque fois avec les mêmes produits de boulangerie et de pâtisserie (9, 10).

33. Procédé selon l'une des revendications de procédé précédentes, **caractérisé en ce que** le stockage, le traitement et la sortie sont exécutés successivement dans au moins deux sections (2, 3) physiquement séparées d'un dispositif, en particulier d'un dispositif selon l'une des revendications précédentes, sachant que les sections (2, 3) sont disposées sur les deux côtés d'un moyen de séparation constructif (4).

34. Procédé selon l'une des revendications de procédé précédentes, **caractérisé en ce que** les produits de boulangerie et de pâtisserie (9, 10) sont stockés temporairement entre deux sections (2, 3), dans un magasin tampon (44).

35. Procédé selon l'une des revendications de procédé précédentes, **caractérisé en ce que** les produits de boulangerie et de pâtisserie (9, 10) sont climatisés dans l'une au moins des sections (1, 2, 3) selon la demande.

36. Procédé selon l'une des revendications de procédé précédentes, **caractérisé en ce que** des informations sur le type, la quantité ou le moment du débit de rotation des produits de boulangerie et de pâtisserie sont enregistrées, sachant que ces informations sont de préférences analysées et les résultats utilisés pour la commande du dispositif.

37. Procédé selon l'une des revendications de procédé précédentes, **caractérisé en ce que** les substances odorantes générées lors de la cuisson au four sont au moins temporairement refoulées avec l'air ambiant dans l'espace de vente.

38. Procédé selon l'une des revendications de procédé précédentes, **caractérisé en ce que** le dispositif est arrêté au moins partiellement, immédiatement ou en différé, en cas de niveau de remplissage élevé du magasin ou d'appel de produits de boulangerie ou de pâtisserie faible ou totalement inexistant.
